Europäisches Patentamt

**European Patent Office**

**Office européen des brevets**

(19)

(11) Numéro de publication: **0 360 719**
**A1**

## (12) DEMANDE DE BREVET EUROPEEN

(21) Numéro de dépôt: **89460028.7**

(22) Date de dépôt: **13.09.89**

(51) Int. Cl.5: **H 04 N 9/79**

(30) Priorité: **21.09.88 FR 8812512**

(43) Date de publication de la demande:
**28.03.90 Bulletin 90/13**

(84) Etats contractants désignés: **DE ES GB IT NL**

(71) Demandeur: **ETAT FRANCAIS représenté par le Ministre des PTT (Centre National d'Etudes des Télécommunications)**
**38-40 rue du Général Leclerc**
**F-92131 Issy-les-Moulineaux (FR)**

**TELEDIFFUSION DE FRANCE SA**
**10 rue d'Oradour sur Glane**
**F-75732 Paris Cédex 15 (FR)**

(72) Inventeur: **Gaucher, Gilbert**
**12, rue Beaumanoir**
**F-35410 Chateaugiron (FR)**

**Gautier, Christian**
**Le Boulais**
**F-35490 Acigne (FR)**

(74) Mandataire: **Le Guen, Louis François**
**CABINET Louis LE GUEN 38, rue Levavasseur B.P. 91**
**F-35802 Dinard Cédex (FR)**

(54) **Procédé d'enregistrement sur bande magnétique et de lecture de signaux D2-MAC/PAQUET.**

(57) A l'enregistrement, dans chaque signal vidéo D2-MAC/PA-QUET, les composantes chrominance et luminance sont décompressées temporellement pour être enregistrées sur une bande magnétique par deux canaux (A, B). Les deux canaux servent à enregistrer pratiquement simultanément les composantes décompressées d'une ligne impaire $(2i+1)$ et celles de la ligne paire $(2(i+1))$ qui la suit.

Par ailleurs, la salve de données à codage duobinaire est numérisée, convertie en un train numérique à codage NRZ. Chaque train numérique relatif à un signal vidéo de ligne paire $(2(i+1))$ est mémorisé en série avec le train numérique relatif au signal vidéo de ligne impaire précédente $(2i+1)$ pour former un paquet qui est décompressé temporellement pour être enregistré, après recodage duobinaire, à la fois avec les composantes chrominance et luminance relatives à la ligne impaire $(2i+1)$ et celles relatives à la ligne paire $(2(i+1))$. A la lecture, les composantes chrominance et luminance d'un couple de lignes impaires $(2i+1)$ et paire $(2(i+1))$ sont décompressées temporellement, d'une part, et les paquets correspondant auxdites lignes étant décompressés, d'autre part. La sélection dans chacun des paquets du premier train à mettre en tête du signal vidéo D2-MAC/PAQUET de la ligne impaire $(2i+1)$ et celle du second train à mettre en tête du signal vidéo D2-MAC/PAQUET de ligne paire $(2(i+1))$ sont faites en fonction d'informations d'erreurs.

Des moyens pour mettre en oeuvre le procédé sont également décrits.

FIG.1

EP 0 360 719 A1

Bundesdruckerei Berlin

# Description

La présente invention concerne un procédé d'enregistrement et de lecture de signaux de télévision D2-MAC/PAQUET en utilisant des magnétoscopes grand-public légèrement modifiés. L'invention concerne également les moyens de mise en oeuvre du procédé.

On rappelle que les signaux de télévision D2-MAC/PAQUET sont des signaux qui sont conformes à une nouvelle norme internationale et qui sont destinés à être transmis et diffusés à partir de satellites de télédiffusion et de télécommunications. La largeur de la bande de fréquences occupée par ces signaux est de 8,4 MHz. En comparaison, la largeur de bande des magnétoscopes grand-public est actuellement inférieure à 4,0 MHz, soit inférieure à la moitié de celle de la bande du signal, ce qui rend ces appareils impropres à enregistrer directement les signaux D2-MAC/PAQUET. On a mentionné ci-dessus la valeur 4,0 MHz car ce sera la largeur de bande des prochains magnétoscopes grand-public dits super-VHS ou S.VHS.

Il était donc nécessaire de trouver de nouveaux procédés d'enregistrement et de lecture pour pouvoir utiliser des magnétoscopes et des cassettes grand-public. Une solution consiste à traiter le signal analogique à bande large en le numérisant, en démultiplexant temporellement le train numérique obtenu afin de créer deux trains numériques qui sont chacun décompressés temporellement, puis transmis sur deux canaux dont la bande passante est au moins égale à la moitié de la largeur de bande du signal pour être appliqués, après conversion numérique-analogique, à deux ensembles de têtes d'enregistrement de magnétoscopes grand-public. Les deux ensembles de têtes enregistrent simultanément sur des paires de pistes obliques parallèles. En mode lecture, les signaux analogiques lus simultanément par les deux ensembles de têtes de lecture sont transmis sur deux canaux pour être chacun numérisés, comprimés temporellement, puis multiplexés temporellement, le train unique obtenu étant ensuite reconverti en signal analogique D2-MAC/PAQUET reconstruit.

A titre d'exemple, cette solution est décrite dans l'article technique intitulé "Magnétoscope à large bande pour signaux D2-MAC/PAQUET" par E. Güttner, M. Richter et Ch. Gautier, et paru dans la revue française "Le Haut-Parleur", pp. 78-82, juin 1988, n° 1753. A titre indicatif, on pourra se reporter également aux documents EP-A-0 226 796, EP-A-0 243 739, EP-A-0 258 721 et EP-A-0 262 362.

Les solutions décrites dans les documents cités ci-dessus conviennent pour les composantes de chrominance et de luminance du signal D2-MAC/PAQUET, mais n'offrent qu'une faible garantie en ce qui concerne les données associées au signal. En effet, dans le signal D2-MAC/PAQUET, les données numériques de la salve de données, placées en tête de chaque signal vidéo, sont codées sous forme duobinaire, mais occupent une bande de fréquences de 5 MHz, donc plus large que la bande passante d'un canal unique d'enregistrement sur un magnétoscope grand-public. Il faut donc, de toute façon, procéder à une décompression temporelle. Cette décompression de la salve de données est, dans les solutions connues et après transformation duobinaire-quatre niveaux, effectuées avec celle des composantes chrominance et luminance. Mais la lecture d'un enregistrement sur bande magnétique est souvent entachée de pertes d'information dues à plusieurs causes. Premièrement, des réductions d'amplitude du signal lu ou "drop-out" peuvent affecter tout ou partie d'un signal vidéo, c'est-à-dire d'une ligne. Deuxièmement, des distorsions importantes sont causées par les fluctuations du contact têtes-bande ou par les irrégularités de la couche magnétique.

Ces phénomènes produisent sur un signal vidéo analogique, c'est-à-dire sur les composantes chrominance et luminance, des perturbations peu visibles et les plus gênantes sont corrigées en effectuant une compensation de drop-out. Un exemple d'une telle correction est décrit dans le document EP-A-0 258 721.

Mais, dans le cas de données numériques, ces perturbations se traduisent par la perte des informations atteintes et cette perte peut provoquer à son tour des désordres plus ou moins importants dans le signal tout entier.

Il est donc nécessaire de protéger les données numériques. Dans les appareils enregistreurs numériques, cette protection est généralement réalisée en utilisant des méthodes de codage particulières, par exemple en utilisant des codes étendus, et par l'adjonction de codes correcteurs d'erreurs, qui permettent la détection et la correction d'un certain nombre d'erreurs dans un message de longueur définie.

Le message contenu dans la salve de données d'un signal D2-MAC/PAQUET contient bien des protections de ce type, mais les perturbations survenant à la lecture d'un enregistrement sur une bande magnétique de cassette grand-public les rendent souvent inefficaces. En effet, les codes employés permettent la correction d'erreurs isolées ou sur quelques bits consécutifs, alors que les défauts sur une bande provoquent des pertes de suites de bits beaucoup plus importantes.

Une solution pour augmenter la fiabilité de la lecture consisterait, à l'enregistrement, à décoder le signal duobinaire en signal NRZ, puis à décoder la structure des paquets contenus, et à ajouter aux signaux ainsi décodés et démultiplexés des codes de correction adaptés à l'enregistrement sur bande magnétique. Ces traitements effectués avant l'enregistrement devraient, à lecture, être répétés dans un ordre inverse. Cette solution est très lourde en moyens nécessaires pour la mettre en oeuvre et entraîne, d'une part, un accroissement important du débit numérique et, d'autre part, un retard qui la rend inutilisable, à moins de disposer de capacité de mémoires assez élevées pour compenser ce retard, dans le cas de signaux embrouillés pour lesquels il faut conserver une phase relative entre les données et la synchronisation image.

Un objet de la présente invention consiste à prévoir un procédé d'enregistrement et de lecture permettant d'assurer une meilleure protection des données numériques contenues dans la salve de données, en utilisant peu de moyens supplémentaires et sans entraîner de retard des données par rapport au reste du signal D2-MAC/PAQUET reconstruit.

Suivant une caractéristique de l'invention, il est prévu un procédé d'enregistrement sur bande magnétique et de lecture de signaux D2-MAC/PAQUET, dans lequel, à l'enregistrement, dans chaque signal vidéo D2-MAC/PAQUET, d'une part, les composantes chrominance et luminance sont décompressées temporellement pour être enregistrées sur une bande magnétique par deux canaux, les deux canaux servant à respectivement enregistrer pratiquement simultanément les composantes décompressées d'une ligne impaire et celles de la ligne paire qui la suit, et, d'autre part, la salve de données à codage duobinaire est numérisée, convertie en un train numérique à codage NRZ, puis mémorisée, chaque train numérique relatif à un signal vidéo de ligne paire étant ainsi mémorisé en série avec le train numérique relatif au signal vidéo de ligne impaire précédente pour former un paquet qui est décompressé temporellement pour être enregistré, après recodage duobinaire, à la fois avec les composantes chrominance et luminance relative à ladite ligne impaire et celles relatives à ladite ligne paire, et, à la lecture, les composantes chrominance et luminance d'une couple de lignes impaire et paire étant décompressées temporellement, d'une part, et les paquets correspondant auxdites lignes étant décompressés, d'autre part, la sélection dans chacun desdits paquets du premier train à mettre en tête du signal vidéo D2-MAC/PAQUET de ladite ligne impaire et celle du second train à mettre en tête du signal vidéo D2-MAC/PAQUET de ligne paire étant faites en fonction d'informations d'erreurs.

Suivant une autre caractéristique, il est prévu un procédé d'enregistrement et de lecture de signaux D2-MAC/PAQUET dans lequel, en mode enregistrement, chaque signal vidéo D2-MAC/PAQUET incident est numérisé, puis le signal numérique obtenu est démultiplexé temporellement, les échantillons numériques correspondant aux composantes chrominance et luminance étant encore démultiplexés, à la fréquence ligne, sur deux voies, puis respectivement décompressés temporellement, puis convertis en composantes analogiques décompressées pour être sélectivement transmis par deux canaux, et les échantillons correspondant à la salve de données étant décodés, puis traités de manière que les données décodées portées par un signal incident de ligne paire soient mises en série avec les données décodées portées par le signal incident de ligne impaire précédente pour former un paquet de données qui, après conversion en signal analogique duobinaire, est multiplexé avec les échantillons des composantes chrominance et luminance des lignes paire et impaire portant lesdites données, les signaux transmis par les deux canaux étant enregistrés simultanément sur deux pistes distinctes d'une bande magnétique, et, en mode lecture, les signaux lus simultanément sur les pistes de la bande magnétique étant respectivement traités, pour éventuellement détecter une situation de drop-out, puis numérisés et démultiplexés temporellement pour séparer les composantes chrominance et luminance, d'une part, et les paquets de données, d'autre part, les échantillons des composantes chrominance et luminance étant décompressés et, en fonction des cas de drop-out, multiplexés et convertis en signal analogique, les paquets de données étant décodés, puis décompressés et séparés en données de ligne impaire et de ligne paire, qui sont, également en fonction des informations de drop-out, sélectivement multiplexées avec les échantillons des composantes chrominance et luminance des lignes correspondantes, puis convertis avec celles-ci.

Suivant une autre caractéristique, en mode lecture, le décodage des paquets de données codées en duobinaire, fournit des indications d'erreurs concernant séparément les données de lignes impaire et paire qui sont associées aux informations de drop-out pour sélectivement multiplexer les données avec les composantes chrominance et luminance.

Suivant une autre caractéristique, les moyens de mise en oeuvre du procédé d'enregistrement, comprennent un convertisseur analogique/numérique à l'entrée duquel est appliqué le signal D2-MAC/PAQUET incident et dont la sortie est reliée à l'entrée d'un multiplexeur dont deux sorties sont respectivement reliées aux entrées d'unités de décompression temporelle de composantes chrominance et luminance, et une troisième sortie est reliée à l'entrée de décompression temporelle de salve de données ayant deux sorties, les sorties des unités et du circuit de décompression temporelle étant respectivement reliées aux entrées de deux multiplexeurs dont les sorties sont reliées par deux canaux aux ensembles de têtes d'enregistrement du magnétoscope, le circuit de décompression des salves de données comprenant un décodeur de Viterbi dont la sortie est reliée à une mémoire d'assemblage capable de mémoriser deux salves successives de données portées par une ligne impaire et la ligne paire qui la suit immédiatement, la sortie de la mémoire d'assemblage étant reliée à l'entrée d'un démultiplexeur à deux paires de sorties, les premières sorties des paires étant reliées à des premières mémoires de décompression temporelle et les secondes sorties des paires étant reliées à des secondes mémoires de décompression, les sorties d'une paire de mémoires de décompression temporelle étant reliées aux entrées d'un multiplexeur dont la sortie est reliée à l'entrée d'un codeur duobinaire et les sorties de l'autre paire de mémoires de décompression temporelle étant reliées aux entrées d'un autre multiplexeur dont la sortie est reliée à l'entrée d'un autre codeur duobinaire, les sorties des codeurs duobinaires étant reliés aux premières entrées de multiplexeurs à deux entrées dont les secondes entrées sont respectivement reliées aux sorties des unités de décompression de composantes chrominance et luminance et dont les sorties sont reliées aux deux canaux.

Suivant une autre caractéristique, les moyens de mise en oeuvre du procédé de lecture, comprennent deux convertisseurs analogique/numérique aux entrées desquelles sont appliqués les signaux décompressés lus par deux ensembles de têtes de lecture, les sorties des convertisseurs analogique/numérique étant respectivement reliées aux entrées de deux multiplexeurs, dont les premières sorties sont reliées aux entrées de deux unités de compression temporelle des composantes chrominance et luminance, et dont les deux secondes sorties sont respectivement reliées aux deux entrées d'un circuit de compression temporelle des données, lequel comprend deux décodeurs de Viterbi respectivement reliées auxdites entrées et dont les sorties sont respectivement reliées aux entrées de deux démultiplexeurs dont les sorties sont reliées à des mémoires de décompression temporelle dont les sorties sont reliées aux entrées d'un multiplexeur de sélection à autant d'entrées que de mémoires de compression temporelles, dont l'entrée de commande est reliée à la sortie d'un circuit logique de commande, et dont la sortie est reliée à une mémoire tampon dont la sortie est reliée, par un codeur duobinaire, à une entrée d'un multiplexeur à trois entrées dont les autres entrées sont respectivement reliées aux unités de compression temporelle des composantes chrominance et luminance, et dont la sortie est reliée à un convertisseur numérique/analogique qui délivre le signal D2-MAC/ PAQUET reconstruit.

Suivant une autre caractéristique, les deux convertisseurs analogique/numérique sont précédés de décodeurs de drop-out dont les sorties sont reliées au circuit logique de commande.

Suivant une autre caractéristique, les décodeurs de Viterbi comportent respectivement des sorties d'information d'erreurs qui sont reliées au circuit logique de commande.

Les caractéristiques de l'invention mentionnées ci-dessus, ainsi que d'autres, apparaîtront plus clairement à la lecture de la description suivante d'un exemple de réalisation, ladite description étant faite en relation avec les dessins joints, parmi lesquels:

la Fig. 1 montre des diagrammes temporels du signal vidéo classique du système D2-MAC/ PAQUET et du signal vidéo étendu suivant l'invention,

la Fig. 2 est un bloc-diagramme général d'un système d'enregistrement et de lecture à deux canaux,

la Fig. 3 est une représentation schématique d'un tambour de têtes utilisé dans le système de la Fig. 2,

la Fig. 4 est une représentation schématique de l'arrangement des informations enregistrées par les têtes montrées à la Fig. 3,

la Fig. 5 montre des diagrammes temporels illustrant le fonctionnement du système de la Fig. 2 en mode d'enregistrement,

la Fig. 6 est un bloc-diagramme du circuit d'expansion temporelle du système de la Fig. 2,

la Fig. 7 est un bloc-diagramme d'une unité d'expansion temporelle des composantes luminance et chrominance utilisées dans le circuit de décompression temporelle de la Fig. 6,

la Fig. 8 montre des diagrammes temporels illustrant le fonctionnement des unités d'expansion temporelles de la Fig. 7,

la Fig. 9 est un bloc-diagramme du circuit de traitement des paquets de données utilisé dans le circuit de décompression temporelle de la Fig. 6,

la Fig. 10 montre des diagrammes temporels illustrant le fonctionnement du circuit de traitement de la Fig. 9,

la Fig. 11 montre les diagrammes temporels des signaux complets étendus sur les deux canaux de la Fig. 2,

la Fig. 12 est un bloc-diagramme général du circuit de compression temporelle du système de la Fig. 2,

la Fig. 13 est un bloc-diagramme d'une unité de compression des composantes chrominance et luminance utilisées dans le circuit de la Fig. 12,

la Fig. 14 montre des diagrammes temporels illustrant le fonc tionnement des unités de compression temporelle de la Fig. 13,

La Fig. 15 est un bloc-diagramme du circuit de traitement des paquets de données étendus utilisé dans le circuit de la Fig. 12, et

la Fig. 16 montrent des diagrammes temporels illustrant le fonctionnement du circuit de traitement de la Fig. 15.

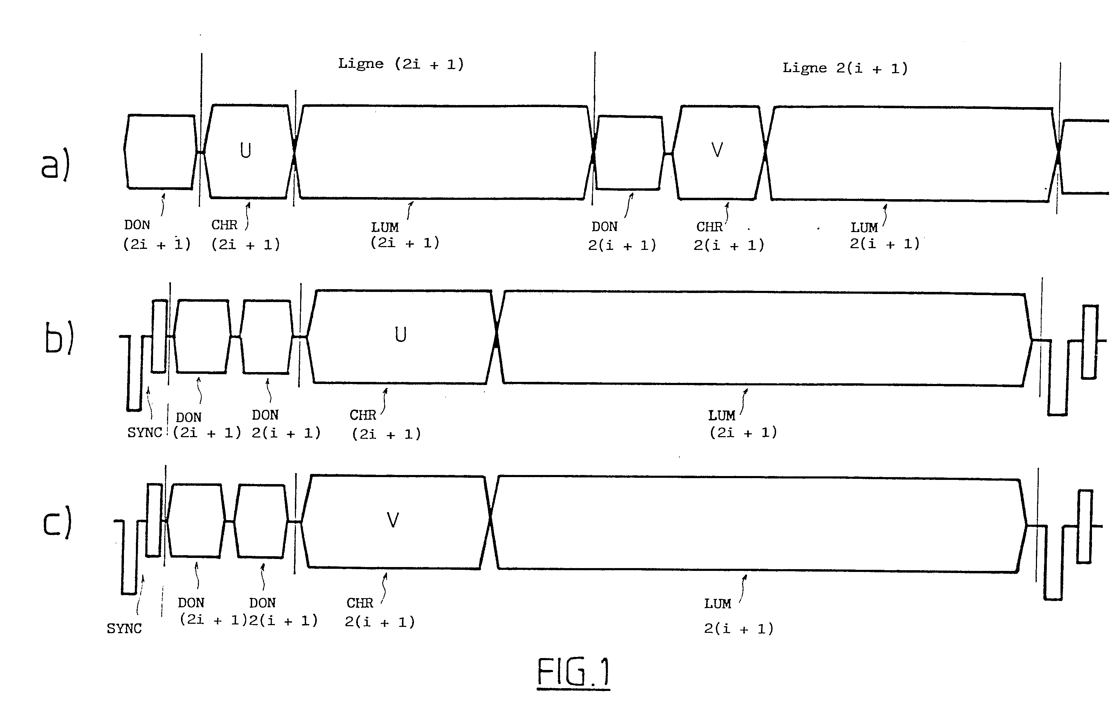

A la Fig. 1, la courbe a) représente les signaux vidéo du système D2-MAC/PAQUET de deux lignes consécutives $(2i+1)$ et $2(i+1)$, où i est un nombre entier positif ou nul. Dans chaque signal vidéo de la courbe a), on distingue trois zones:
- une première zone DON portant un message binaire codé en duobinaire, le message se composant d'un mot de synchronisation (6 bits), suivi de signaux de données et de son (99 bits),
- une zone CHR portant la composante de chrominance, c'est-à-dire alternativement le signal U dans les lignes impaires et le signal V dans les lignes paires, ce signal étant comprimé temporellement, et
- la zone LUM portant la composante de luminance qui est également comprimée temporellement, mais moins que la composante de chrominance, l'ensemble du signal vidéo durant 64 microsecondes.

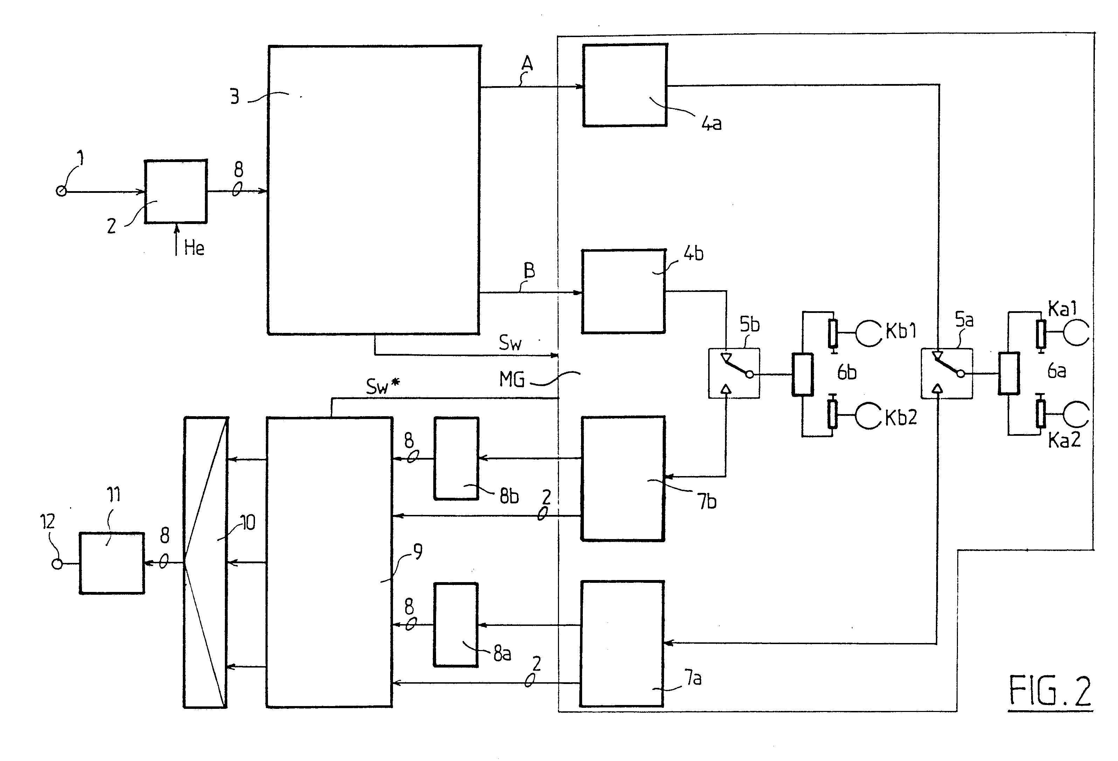

Appliqué à la borne d'entrée 1 du système de la Fig. 2, le signal vidéo D2-MAC/PAQUET est transmis à l'entrée d'un convertisseur analogique/numérique 2 dont la sortie à huit fils est reliée à un circuit d'expansion temporelle 3 comportant deux sorties qui délivrent des signaux vidéo étendus à deux canaux A et B, respectivement. Un signal d'horloge d'échantillonnage He est relié à l'entrée de commande du convertisseur 2. En pratique, la fréquence de l'horloge d'échantillonnage He est de 20,25 MHz, ce qui correspond à 1296 fois la fréquence ligne du signal vidéo du système D2-MAC/PAQUET. Les échantillons sont codés sur huit bits.

Les canaux A et B sont respectivement reliés aux entrées de deux circuits classiques d'enregistrement 4a et 4b dont les sorties sont reliées à des commutateurs enregistrement/lecture 5a et 5b dont les contacts communs sont respectivement reliés à un ensemble de têtes d'enregistrement et de lecture 6a et 6b. Les éléments 4a, 4b, 5a, 5b, et 6a, 6b font, par exemple, partie d'un magnétoscope MG du type grand-public, tel qu'un magnétoscope VHS à haute fidélité. A la Fig. 2, les commutateurs 5a et 5b sont montrés à l'état enregistre ment.

Quand les commutateurs 5a et 5b sont à l'état lecture, ils relient respectivement les ensembles 6a et 6b aux entrées de deux démodulateurs 7a et 7b dont les sorties de signal sont respectivement reliées aux entrées de deux convertisseurs analogiques numériques 8a et 8b, et les sorties de commande à un circuit de compression temporelle 9.

Les sorties des convertisseurs 8a et 8b sont reliées aux entrées respectives d'un circuit de compression temporel 9 dont les trois sorties sont respectivement reliées aux entrées correspondantes d'un multiplexeur 10 dont la sortie est reliée à l'entrée d'un convertisseur numérique/analogique 11 qui délivre un signal vidéo D2-MAC/PAQUET, qui est disponible sur la borne de sortie 12.

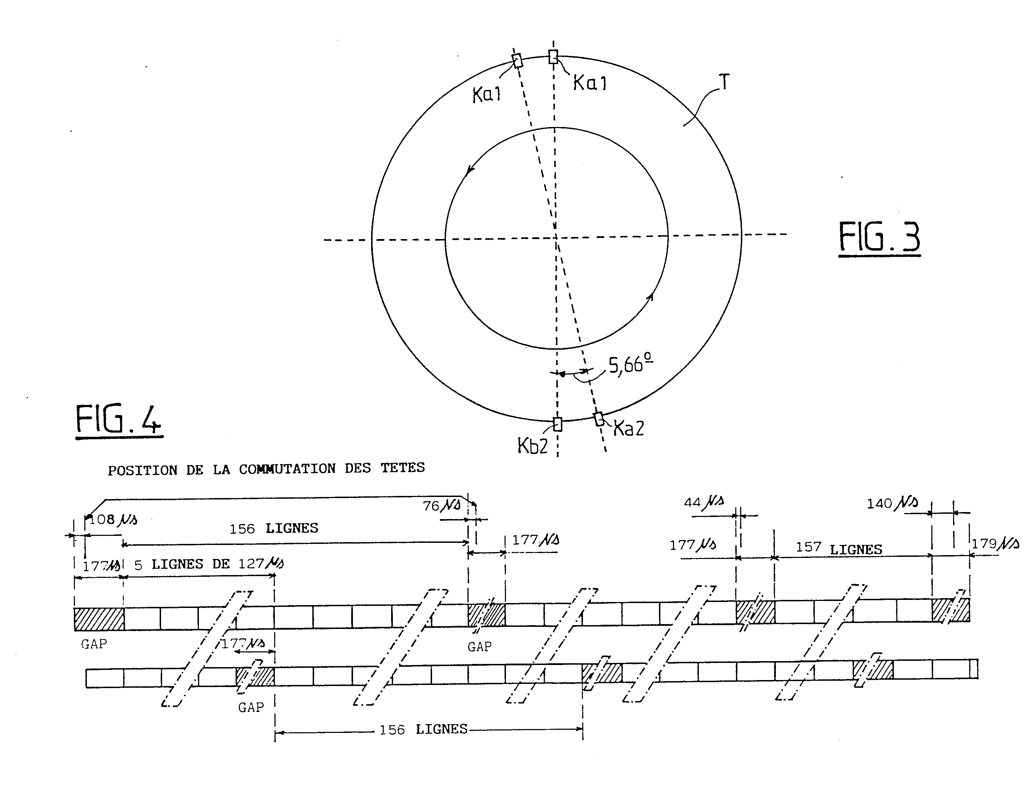

L'ensemble de têtes 6a, 6b, Fig.-3, comprend deux paires de têtes, la première paire Ka1, Ka2 étant associée au canal A et l'autre paire Kb1, Kb2 au canal B. Comme le montre la Fig. 3, les quatre têtes sont portées par un tambour T et sont organisées de manière que, dans chaque paire, les têtes soient opposées à 180°. La ligne diamétrale joignant les têtes de la première paire et celle qui joint les têtes de la seconde paire font entre elles un angle de 5,66°, ce qui correspond à dix lignes du signal vidéo incident, soit à un décalage dans le temps de 640 microsecondes. La largeur de chaque piste enregistrée sur la bande magnétique du magnétoscope MG est de 25 micromètres, soit la moitié de la largeur de piste dans le système VHS, ce qui permet de conserver la vitesse longitudinale du système VHS. L'angle d'azimut des directions des têtes est choisi pour assurer la compatibilité en lecture avec les cassettes VHS.

Comme le montre la Fig. 4, les deux canaux A et B sont enregistrés simultanément. Une image complète est constituée de quatre pistes, ce qui correspond à un tour du tambour T. Au cours de ce tour, écrivent successivement, le doublet formé de Ka1, Kb1, puis le doublet formé de Ka2, Kb2. Pour éviter toute perte d'information due à la commutation des têtes à chaque demi-tour, on verra que le traitement temporel du signal vidéo est prévu pour délivrer aux canaux A et B un signal étendu dont la durée est légèrement plus courte que celle qui correspond au temps de balayage d'une piste, soit 20 ms. L'espace ainsi ménagé ou gap est utilisé pour la commutation des têtes. La durée moyenne du gap est, dans l'exemple décrit, choisie égale à 177 microsecondes.

Une image de 625 lignes étant représentée sur la bande magnétique par quatre pistes, la répartition des lignes sur les pistes devrait être de 625/4 = 156,25 lignes par piste. Une telle disposition entraînerait une perte d'information. C'est pourquoi, dans l'exemple décrit, on a choisi une disposition à trois pistes comportant chacune 156 lignes plus une quatrième piste comportant 157 lignes, en alternance sur les canaux A et B.

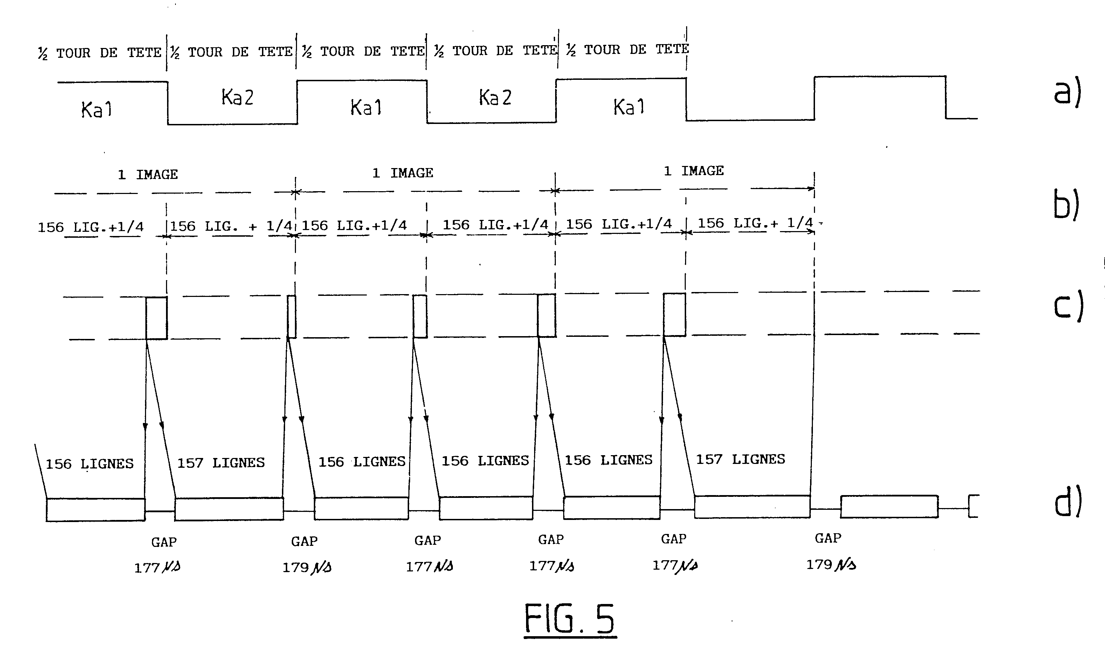

La courbe a) de la Fig. 5 montre la succession des temps pendant lesquels les têtes Ka1 et Ka2 sont successivement utilisées pour l'enregistrement des informations du canal A. Pendant un demi-tour du tambour T, la tête Ka1 est active; pendant le demi-tour suivant, c'est la tête Ka2. En ce qui concerne l'enregistrement des informations du canal B, on aurait une courbe semblable, mais légèrement décalée dans le temps. La courbe b) montre que, pour chaque image, il faut enregistrer deux fois 156 lignes, plus un quart de ligne, sur chaque canal. La courbe c) montre les temps d'écriture des mémoires du canal A. La courbe d) montre les temps de lecture des mémoires du canal A. On aurait des courbes équivalentes pour le canal B.

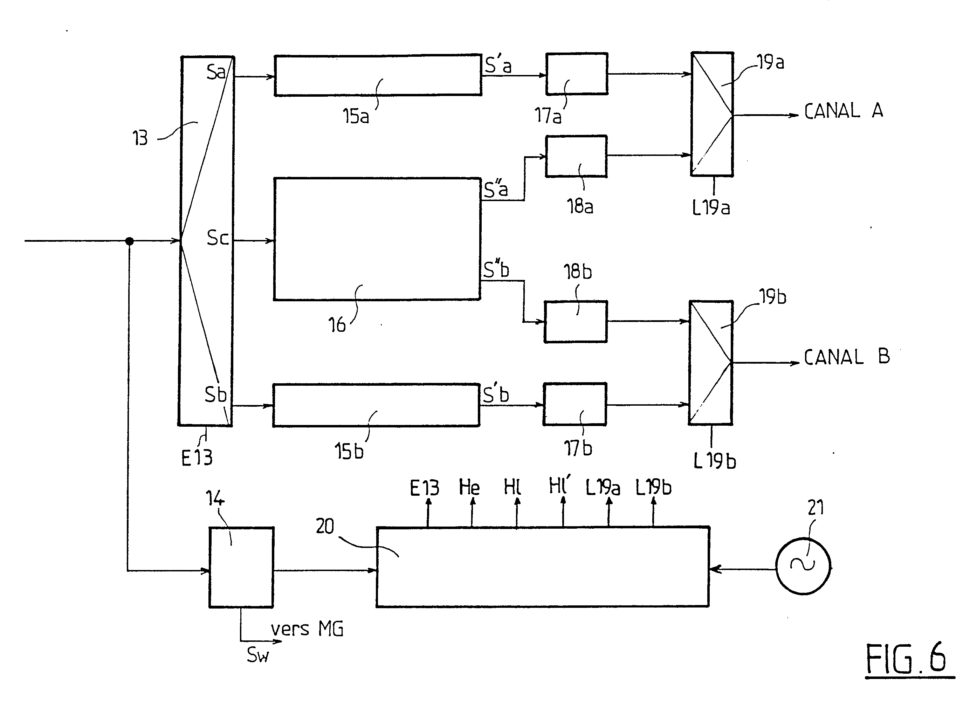

Le circuit d'expansion temporelle 3 de la Fig. 2, montré à la Fig. 6, a son entrée reliée, d'une part, à l'entrée d'un démultiplexeur 13 et, d'autre part, à celle d'un extracteur de synchronisation 14.

Le démultiplexeur 13, Fig. 6, a trois sorties Sa, Sb et Sc, et une entrée de commande E13. Les sorties Sa et Sb sont respectivement reliées à deux unités 15a et 15b de décompression temporelle des zones CHR et LUM du signal de la Fig. 1. La sortie Sc est reliée à l'entrée d'un circuit de traitement des données numériques 16. Les sorties respectives S'a et S'b des unités 15a et 15b sont reliées aux entrées de deux convertisseurs numérique/analogique 17a et 17b. Le circuit de traitement 16 a deux sorties S"a et S"b qui sont respectivement reliées à deux autres convertisseurs numérique/analogique 18a et 18b. Les sorties des convertisseurs 17a et 18a sont respectivement reliées aux entrées d'un multiplexeur 19a dont la sortie est reliée au canal A, Fig. 2. Les sorties des convertisseurs 17b et 18b sont respectivement reliées aux entrées d'un multiplexeur 19b dont la sortie est reliée au canal B, Fig. 2. On a noté L19a et L19b les entrées de commande des multiplexeurs 19a et 19b.

Une sortie du circuit extracteur de synchronisation 14 est reliée à l'entrée d'une base de temps principale 20 dont l'entrée d'horloge est reliée à la sortie d'un oscillateur stabilisé 21. La base de temps principale 20 délivre des signaux d'horloge He, HI et HI', ainsi que des signaux de commande logique E13, L19a et L19b aux circuits 13, 19a et 19b. Une autre sortie du circuit extracteur de synchronisation 14 est reliée à une entrée correspondante, non montrée, du magnétoscope MG pour lui appliquer un signal de synchronisation Sw. La liaison correspondante est aussi montrée à la Fig. 2.

En pratique, le signal Sw, fabriqué dans le circuit 14, est un signal de synchronisation qui correspond au début de chaque séquence complète d'écriture sur les deux canaux A et B. Cette séquence, comme on le comprendra mieux par la suite, à une durée de 4 trames du signal D2-MAC/PAQUET incident, au bout desquelles un nouveau cycle recommence. Le signal Sw, sous la forme d'un bit, est fabriqué par décodage, dans la ligne 625 du signal D2-MAC/PAQUET du mot LSW, et comptage d'une trame impaire sur deux.

Le signal Sw est destiné à être enregistré sur une piste particulière de la bande magnétique du magnétoscope MG, c'est-à-dire la piste "control-track", avec le signal normal de pilotage des servo-mécanismes régulant la vitesse de défilement de la bande. L'enregistrement du signal Sw sur la piste "control-track" peut être effectué en utilisant un système tel que celui décrit dans le document FR-A-2 458 874.

La signal E13 est un mot de deux bits qui, appliqué à l'entrée de commande du démultiplexeur 13, provoque:
- pendant 216 périodes d'horloge He à 20,25 MHz, l'aiguillage du signal numérique délivré par le convertisseur analogique/numérique 2, par la sortie Sc, vers le circuit de traitement 16 qui reçoit ainsi les échantillons correspondant à la zone DON de chaque signal vidéo montré dans la courbe a) de la Fig. 1,
- puis, pendant les 1080 périodes d'horloge suivantes, l'aiguillage du signal numérique alernativement vers l'unité 15a ou l'unité 15b, deux lignes consécutives sur quatre.

Le signal L19a commande le multiplexeur 19a pour que, pendant 168 périodes d'horloge HI', il laisse passer vers le canal A le signal analogique provenant du convertisseur 17a, puis, pendant 436 périodes d'horloge HI', le signal analogique délivré par le converti sseur 18a, puis jusqu'à la fin de la ligne, le signal délivré par le convertisseur 17a. Le signal L19b commande de même le multiplexeur 19b.

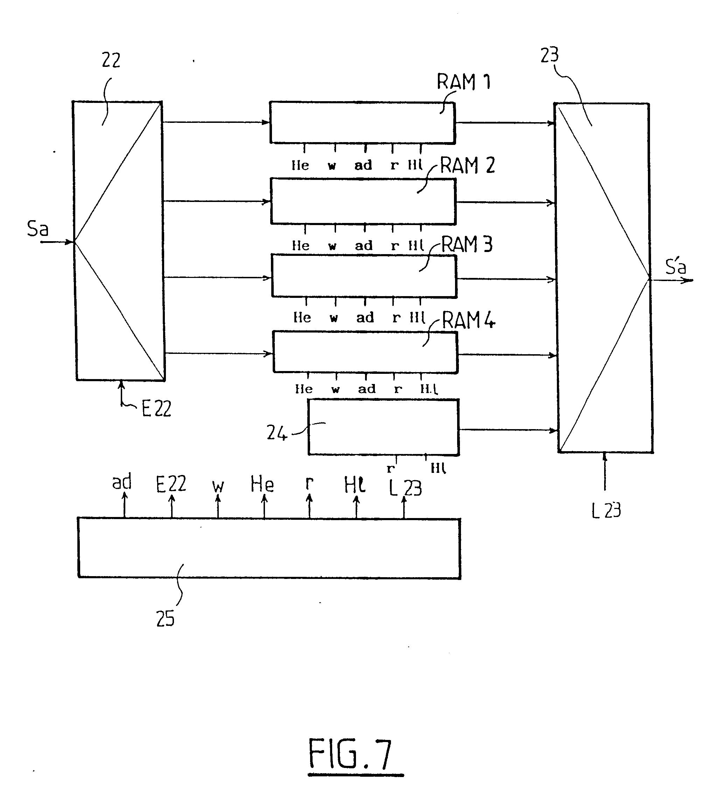

L'unité de décompression 15a de la Fig. 6, dont le bloc-diagramme est représenté à la Fig. 7, comprend un démultiplexeur 22 à quatre sorties dont l'entrée est reliée à la sortie Sa du démultiplexeur 13 et dont les sorties sont respectivement reliées aux entrées de quatre mémoires à accès aléatoire RAM1 à RAM4. Les sorties des mémoires RAM1 à RAM4 sont respectivement reliées à quatre entrées d'un multiplexeur à cinq entrées 23 dont la cinquième entrée est reliée à la sortie d'un circuit de synthèse de top de synchronisation et salve de fréquence 24 et dont la sortie Sa est reliée au convertisseur numérique/analogique 17a, Fig. 6. L'unité 15a est complétée par une base de temps annexe 25. La structure de l'unité 15b est identique à celle de l'unité 15a.

La base de temps annexe 25 délivre les signaux de commande ou d'horloges suivants:
- le signal E22 servant à sélecter, dans le démultiplexeur 22, la sortie vers laquelle les composantes de chrominance et luminance reçues du démultiplexeur 13 sont à transmettre pour les enregistrer dans une des mémoires RAM1 à RAM4,
- l'horloge d'écriture He pour les mémoires RAM1 à RAM4, soit ici un signal d'horloge à 20,25 MHz,
- le signal de commande d'enregistrement w servant à sélecter et à commuter en mode écriture l'une des mémoires RAM1 à RAM4,
- le signal d'adressage ad dans les mémoires RAM1 à RAM4,

- le signal de commande de lecture r servant à sélecter et à commuter en mode lecture d'une des mémoires RAM1 à RAM4 ou le circuit de synthèse 24,
- l'horloge de lecture HI des mémoires RAM1 à RAM4, soit ici à 11,6875 MHz, et
- le signal de commande L23 servant à sélecter, à chaque ligne lue, l'entrée reliée au circuit 24, puis l'entrée reliée à la mémoire RAM1 à RAM4 à lire. .

La fréquence de l'horloge de lecture HI étant de l'ordre de la moitié de celle de l'horloge d'écriture He, les zones CHR et LUM se trouvent, après lecture, être étendue avec une longueur presque deux fois plus longue. En pratique, la fréquence de l'horloge HI est légèrement plus grande que la moitié de celle de l'horloge He pour permettre de loger la partie SYNC extraite du circuit 24 et fournir l'espace nécessaire à la constitution du gap.

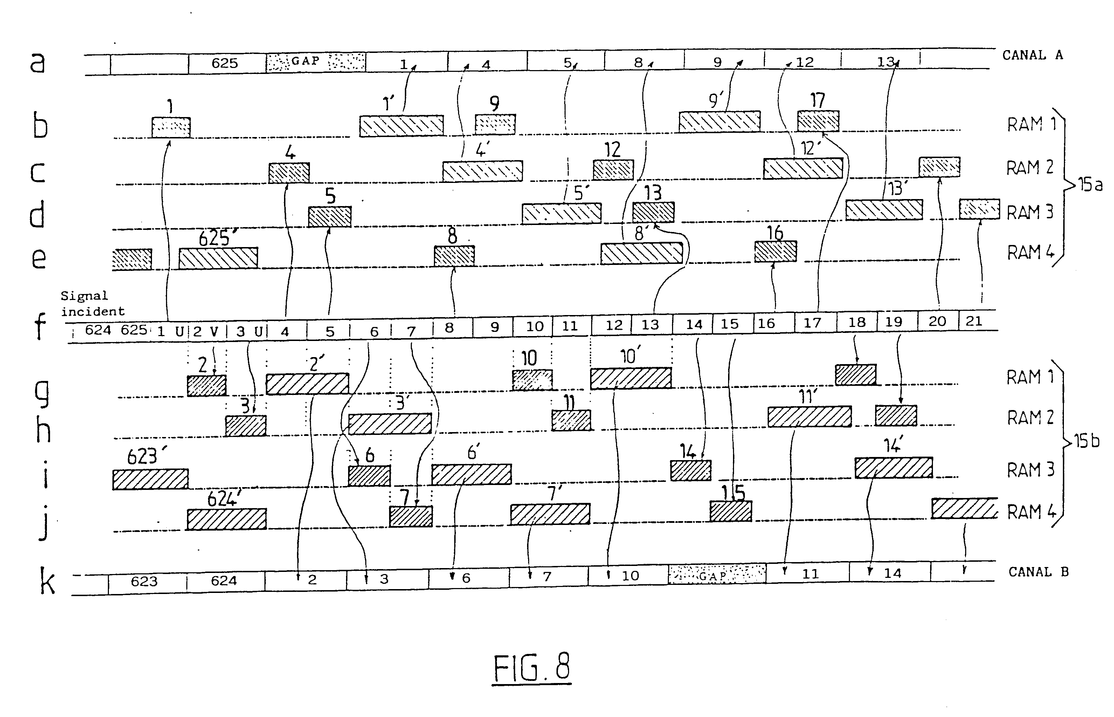

Le fonctionnement de l'unité 15a, Fig. 7, va maintenant être décrit en se reportant aux courbes b) et c) de la Fig. 1. Chacune de ces courbes se décompose en trois parties: une première partie SYNC, une seconde DON + DON et une troisième CHR+LUM. La partie SYNC comprend une impulsion négative de synchronisation suivie d'une salve de fréquence de référence. L'impulsion négative est destinée à être reconnue dans le magnétoscope MG qui s'en sert pour son propre fonctionnement d'une manière classique. La fréquence de la salve de référence est égale à 187 fois la fréquence ligne et est destinée à être utilisée dans la chaîne de lecture. le contenu de cette partie SYNC est extrait, en mode enregistrement, du circuit 24 au début de chaque ligne étendue au rythme de l'horloge HI. Le contenu de la seconde partie DON + DON sera décrit dans la suite. Le contenu de la troisième partie CHR+LUM est extrait d'une des mémoires RAM1 à RAM4, sélectée par la base de temps 25 et également au rythme de l'horloge HI. Il apparaît également que la sélection des entrées dans le multiplexeur 23 est commandée en fonction de la position temporelle des parties dans la ligne étendue et d'un programme qui est enregistré dans la base de temps 25 et qui découle, pour l'homme de métier, de l'examen des diagrammes de la Fig. 8. Le fonctionnement du circuit 15b est identique à celui du circuit 15a.

A la Fig. 8, le diagramme f), à mi-hauteur, montre le signal D2-MAC/PAQUET incident à la fin d'une image et au début de la suivante. Le diagramme b) montre que la mémoire RAM1 du circuit 15a reçoit les zones CHR et LUM de la ligne 1. Le contenu 1' de cette mémoire est lu plus tard avec une horloge presque deux fois plus lente pour être inséré dans le canal A, diagramme a). Cette mémoire RAM1 de 15a redevient disponible pour mémoriser le contenu de la ligne 9 et ce contenu 9' est lu plus tard. Des flèches ont été dessinées pour illustrer les transferts des contenus des lignes successives. Les différentes lectures et écritures sont commandés par les bases de temps 20 et 25 à travers les signaux E13, E22, L23, w, r et ad. L'examen des autres diagrammes permet de comprendre immédiatement le fonctionnement des unités 15a et 15b, qui permettent d'insérer les parties étendues de CHR et LUM dans les canaux A et B.

La Fig. 8 montrant également les gaps nécessaires au système d'enregistrement à deux têtes pour chaque canal permet également de comprendre l'utilité des quatre mémoires par unité.

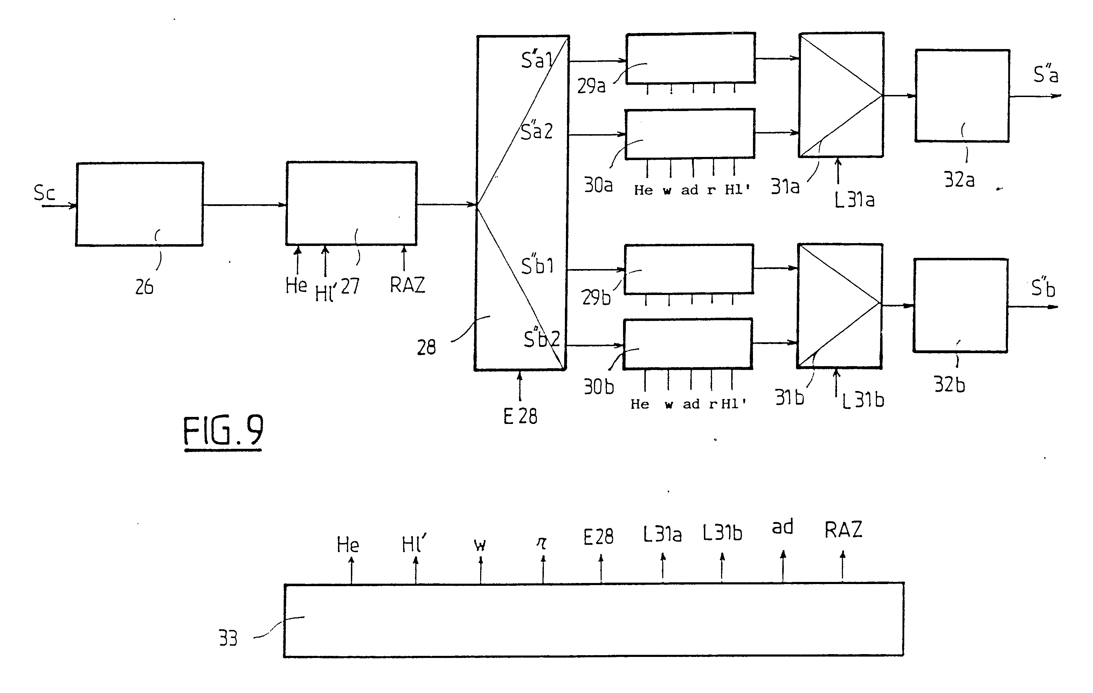

Le circuit de traitement des données 16 de la Fig. 6 est montré en détail à la Fig. 9. Il comprend un décodeur de Viterbi 26 dont l'entrée est reliée à la sortie Sc du démultiplexeur 13 et dont la sortie est reliée à l'entrée d'une mémoire à accès aléatoire 27 dont la sortie est reliée à l'entrée d'un démultiplexeur 28 à deux paires de sorties S"a1, S"a2 et S"b1, S"b2, lesquelles sont respectivement reliées aux entrées de deux paires de mémoires à accès aléatoire 29a, 30a et 29b, 30b. Les sorties des mémoires 29a et 30a sont respectivement reliées aux deux entrées d'un multiplexeur 31a dont la sortie est reliée à l'entrée d'un codeur NRZ/duobinaire 32a. Les sorties des mémoires 29b et 30b sont respectivement reliées aux deux entrées d'un multiplexeur 31b dont la sortie est reliée à l'entrée d'un codeur NRZ/duobinaire 32b. Les sorties des codeurs 32a et 32b sont respectivement reliées aux sorties S"a et S"b, Fig. 6. Enfin, le circuit de traitement 16 est complété par une base de temps annexe 33.

La base de temps annexe 33 délivre les signaux de commande et d'horloges suivants:
- le signal d'horloge d'écriture/lecture He pour la mémoire 27, et d'écriture dans les mémoires 29a, 30a, 29b et 30b,
- l'horloge de lecture Hl' de la mémoire 27 et des mémoires 29a, 30a et 29b, 30b,
- le signal de commande d'enregistrement w servant à sélecter et commuter en mode écriture l'une des mémoires 29a à 30b,
- le signal de commande de lecture r servant à sélecter et commuter en mode lecture l'une des mémoires 29a à 30b,
- le signal E28 servant à sélecter, dans le démultiplexeur 28, la sortie vers laquelle les données lues dans la mémoire 27 sont à transmettre pour les écrire dans l'une des mémoires 29a, 30a, 29b et 30b,
- les signaux de commande de sélection d'entrée L31a et L31b des multiplexeurs 31a et 31b, respectivement,
- un signal de remise à zéro RAZ.

A chaque ligne de signal D2-MAC/PAQUET, le décodeur de Viterbi 26 reçoit du démultiplexeur 13 le signal numérique de la zone DON, courbe a) de la Fig. 1, dans lequel des données sont codées en duobinaire et délivre ces mêmes données en code NRZ, en utilisant l'algorithme de Viterbi qui vérifie le critère de "maximum de vraisem blance a posteriori", soit la recherche du chemin le plus probable entre deux états successifs du système. Un tel décodeur a été décrit dans le document FR-A-2 606 575. On rappelle que le code duobinaire est un code à réponse partielle qui introduit une certain corrélation dans le signal transmis. En particulier, le codage duobinaire interdit certaines transitions. Chaque fois qu'une transition interdite est détectée à la réception dans le décodeur, celui-ci réinitialise le traitement de décodage et, de plus, délivre un signal d'erreur. Dans le décodeur 26, on n'utilise pas la signal d'erreur; par contre, on verra que, dans les décodeurs de Viterbi utilisés dans la chaîne de lecture, les signaux d'erreurs sont comptés et utilisés pour prendre des décisions.

La mémoire vive à accès aléatoire ou RAM 27 a une capacité de 512 bits. Quand une ligne du signal vidéo incident, par exemple la ligne "3", est transmise par le démultiplexeur 13 et est décodée dans le décodeur 26, la mémoire 27 est mise en mode d'écriture pendant 216 périodes d'horloge d'écriture He, après quoi le décodeur 26 ne reçoit plus de signaux. La base de temps 33 fait alors avancer les adresses de quatre pas supplémentaires. Ce décalage de l'adresse a pour effet d'ajouter quatre bits à zéro dans la mémoire 27.

Quand la ligne suivante, soit dans l'exemple décrit la ligne "4", est transmise par le démultiplexeur 13 et est décodée dans le décodeur 26, la mémoire 27 est encore mise en mode d'écriture pour 216 périodes. On a alors enregistré dans la mémoire 27 les échantillons des données des lignes "3" et "4" séparés par quatre zéros. Ainsi, on crée, dans la mémoire 27, le contenu de la partie DON + DON d'une ligne étendue, courbes b) et c), Fig. 1.

Chaque ensemble DON + DON est transféré, pendant le temps correspondant à la zone CHR + LUM, par le démultiplexeur 28, dans les deux mémoires 29a et 29b ou dans deux mémoires 30a et 30b. Dès ce transfert terminé, la mémoire 27 est remise à zéro par le signal RAZ de la base de temps 33.

L'horloge de lecture Hl' des couples de mémoires 29a, 29b et 30a, 30b est plus lente que l'horloge d'écriture He, Celle-ci était de 20,25 MHz tandis que l'horloge de lecture Hl' est de 17,53 MHz. Comme un bit de données est représenté dans les mémoires par deux points mémoire, donc deux périodes d'horloge, on voit que sa durée passe de 2/1296, soit 98,76 ns, à 2/1122, soit 114,08 ns. Le spectre du signal duobinaire qui sera reconstitué après conversion dans les codeurs 32a ou 32b, sera donc ramené de 5,06 MHz à 4,38 MHz. Cette réduction de l'encombrement en fréquence des données codées en duobinaire permet leur enregistrement sur un canal dont la largeur de bande est de l'ordre de 4,5 MHz.

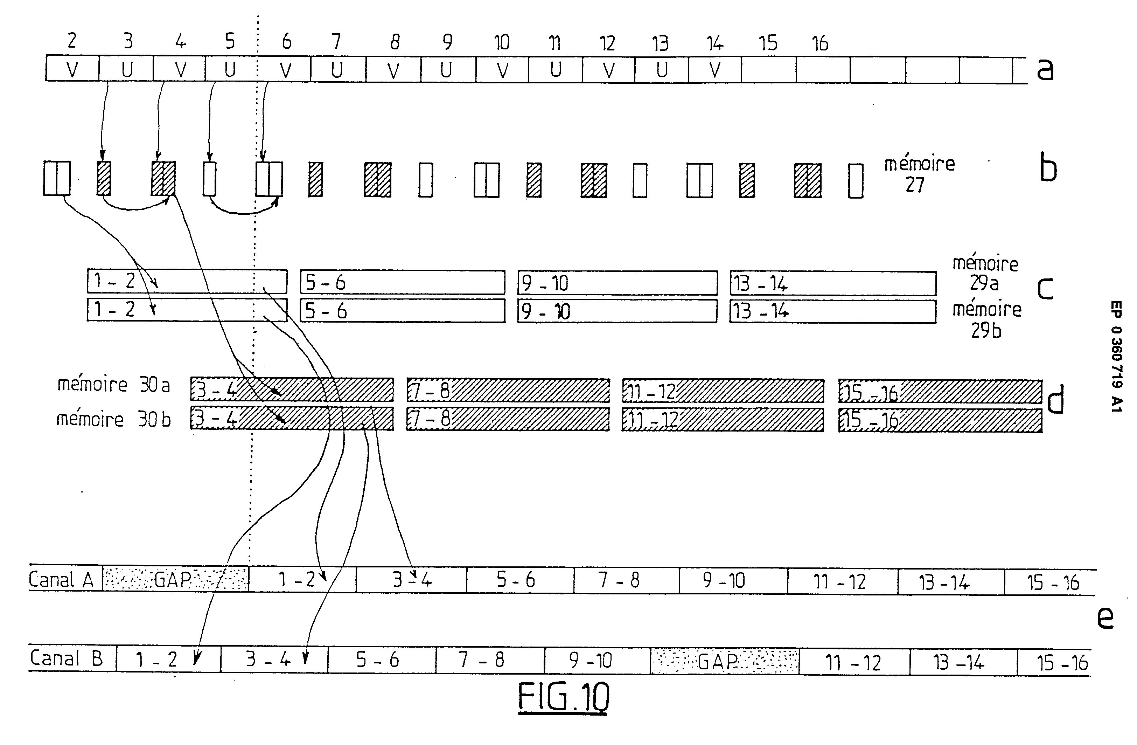

A la Fig. 10, la courbe a) montre le signal vidéo D2-MAC/PAQUET incident et la courbe b) montre comment évolue le contenu de la mémoire 27. Ce contenu étant celui d'un paquet de données DON de ligne impaire (2i + 1), auquel, à la ligne suivante vient s'ajouter celui d'une ligne paire 2(i + 1) et, enfin, étant remis à zéro dès le transfert dans une des paires de mémoires 29a, 30a ou 29b, 30b, et ainsi de suite. La courbe c) Fig. 10, montre la succession des contenus DON + DON des mémoires 29a et 29b tandis que la courbe d) montre l'évolution des contenus DON + DON des mémoires 30a et 30b. Enfin, les courbes e) montrent les contenus des canaux A et B, en ce qui concerne les données.

En pratique, les signaux de la base de temps annexe L31a et L31b, Fig. 9, servent à aiguiller respectivement les contenus des mémoires 29a, 30a et 29b, 30b vers les codeurs 32a et 32b en fonction d'un programme qui correspond aux diagrammes de la Fig. 10 et qui est enregistré dans la base de temps 33.

Enfin, les convertisseurs 17a et 18a, Fig. 6, transforment les signaux provenant des sorties S'a et S''a en signaux analogiques et le multiplexeur 19a réalise l'emboîtement de la partie DON + DON délivrée par le convertisseur 18a entre les parties SYNC et CHR+LUM délivrées par le convertisseur 17a. On obtient donc les signaux qui sont représentés par les courbes b) ou c) de la Fig. 1. Le multiplexeur 19a, Fig. 6, délivre donc le contenu du canal A qui est formé d'une suite de lignes étendues conformes aux signaux soit de la courbe b), soit de la courbe c). En ce qui concerne la formation du contenu du canal B, le processus est le même.

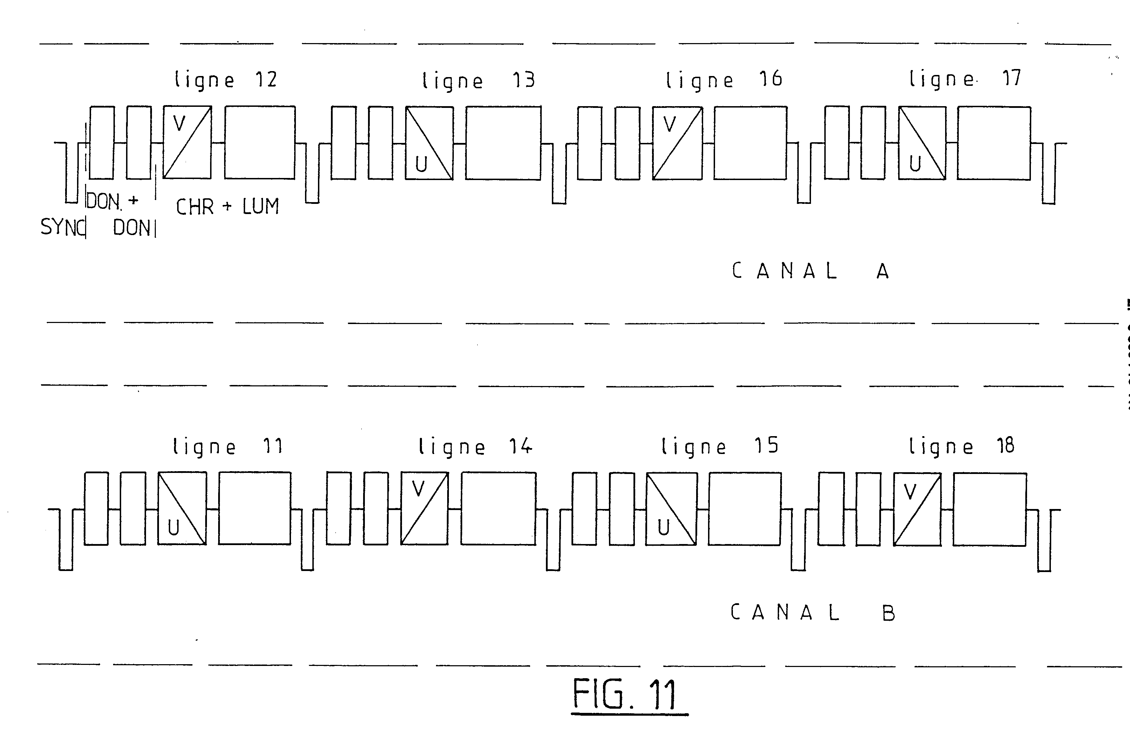

La Fig. 11 montre la disposition des lignes étendues courantes dans les canaux A et B, chaque ligne étendue comportant symboliquement la séquence des parties SYNC, DON + DON et CHR+LUM. On notera que cette disposition correspond à une sorte de grecque, avec $^{12}$ $^{13}$ $_{14}$ $_{15}$ $^{16}$ $^{17}$ $_{18}$ ...

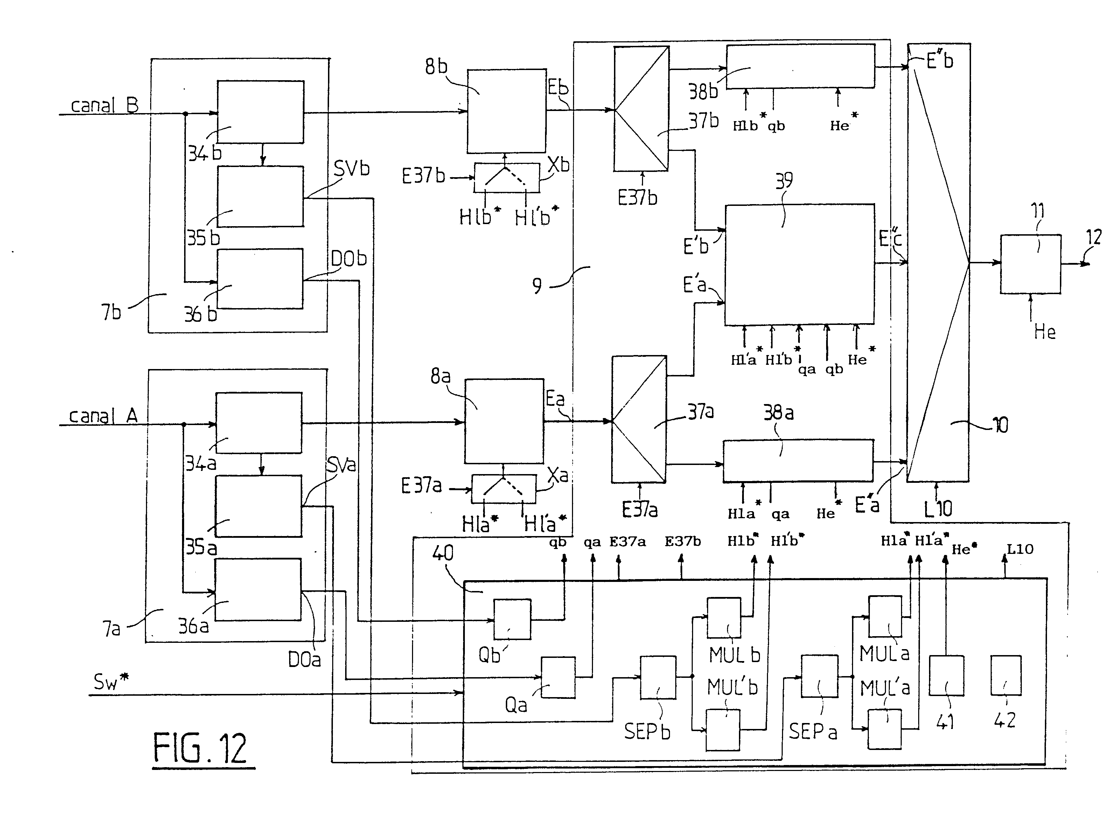

Les démodulateurs 7a et 7b, Fig. 12, font partie du magnétoscope MG où ils remplissent des fonctions classiques, à savoir l'amplification et la correction des signaux lus par les têtes Ka1, Ka2 et Kb1, Kb2, puis la démodulation, le filtrage et la désaccentuation de ces signaux. Comme le montre la Fig. 12, ils comprennent chacun un démodulateur proprement dit 34a ou 34b, un circuit séparateur de synchronisation 35a ou 35b, et un détecteur classique de drop-out 36a ou 36b. Les entrées de 34a et 36a, et de 34b et 36b sont respectivement reliées en parallèle au canal A et au canal B. Une sortie classique de chaque démodulateur 34a ou 34b est reliée à l'entrée du séparateur correspondant 35a ou 35b. Les circuits séparateurs de synchronisation détectent les impulsions négatives des parties SYNC des lignes étendues lues et les orientent respectivement, avec les salves de référence qui les suivent, vers leurs sorties SVa et SVb. Les détecteurs de drop-out 36a et 36b délivrent respectivement sur leurs sorties DOa et DOb un bit "1" ou un bit "0" selon que la ligne étendue en cours de lecture est affectée d'une chute d'amplitude brutale et durable, par exemple dépassant quelques microsecondes, du signal lu. Les sorties de signal des démodulateurs 34a et 34b sont respectivement reliées aux entrées des convertisseurs analogique/numérique associés 8a et 8b.

Chaque convertisseur analogique/numérique 8a ou 8b convertit le signal analogique appliqué en échantillons codés sur huit bits; il fonctionne successivement avec différentes horloges d'échantillonnage, soit 748 fois la fréquence ligne pour les parties SYNC et CHR+LUM, Fig. 1, soit 1122 fois la fréquence ligne étendue pour la partie DON + DON. Ces fréquences sont pratiquement égales aux fréquences HI et HI' utilisées dans la chaîne d'enregistrement et on verra dans la suite comment on les obtient. Les commutations de ces horloges s'effectuent à des instants qui, dans le signal étendu correspondent à des paliers gris ou noir. Etant donné que ces commutations se font pendant des paliers, il devient possible de créer, à l'enregistrement, une légère redondance autour de ces instants de commutation pour supprimer un risque de perte d'information.

Pour chaque convertisseur 8a ou 8b, l'entrée d'horloge est reliée à la sortie d'un commutateur Xa ou Xb qui reçoit les deux horloges d'échantillonnage associées au canal A ou B. Ces horloges sont synthétisées à partir de la salve de référence ajoutée dans la partie SYNC au cours de l'enregistrement. La valeur de la fréquence de la salve de référence est de 187 fois la fréquence ligne et est donc théoriquement dans un rapport simple soit 1/4 avec HI, soit 1/6 avec HI'. Etant donné la séparation des canaux A et B sur la bande du magnétoscope, on distingue deux couples d'horloges d'échantillonnages HIa*, HI'a* et HIb*, HI'b* qui sont synthétisées séparément à partir des salves délivrées aux sorties SVa et SVb, respectivement.

Le circuit de compression temporelle 9, montré à la Fig. 12, a deux entrées de signal Ea et Eb respectivement reliées aux sorties des convertisseurs 8a et 8b et deux paires d'entrées de commande respectivement reliées aux sorties DOa, DOb et SVa, SVb.

L'entrée Ea est reliée à l'entrée d'un démultiplexeur 37a à deux sorties dont une est reliée à une unité de compression temporelle 38a des parties CHR+LUM des lignes étendues lues. L'entrée Eb est reliée à un démultiplexeur 37b à deux sorties dont une est reliée à l'entrée d'une unité de compression temporelle 38b des parties CHR+LUM des lignes étendues lues. Les secondes sorties des démultiplexeurs 37a et 37b sont respectivement reliées à deux entrées E'a et E'b d'un circuit de traitement 39 des données numériques DON + DON des lignes étendues lues. Les sorties des unités 38a et 38b, et du circuit de traitement 39 sont respectivement reliées aux entrées E''a, E'' et E''c du multiplexeur 10 à trois entrées dont la sortie est reliée au convertisseur 11, Fig. 2.

Dans le circuit 9, les signaux délivrés par les sorties DOa, DOb, SVa et SVa sont appliqués à des entrées correspondantes d'une base de temps principale 40. Celle-ci comprend deux mémoires Qa et Qb dont les entrées reçoivent respectivement les signaux de DOa et DOb, et deux séparateurs de salve SEPa et SEPb qui reçoivent respectivement les signaux de SVa et de SVb. Les sorties des mémoires Qa et Qb sont reliées à deux sorties correspondantes qa et qb de la base de temps 40. La sortie du séparateur SEPa est reliée à deux multiplicateurs de fréquence MULa et MUL'a dont les sorties délivrent les horloges reconstituées HIa* et HI'a*. De même, la sortie du séparateur SEPb est reliée à deux multiplieurs qui fournissent les horloges reconstituées HIb* et HI'b*. La base de temps 40 comprend encore un oscillateur stabilisé 41 fournissant une horloge de lecture He*, qui est égale à l'horloge He utilisée dans la chaîne d'enregistrement, et un circuit logique 42 qui fournit des signaux de commutation E37a, E37b et L10 aux différents circuits concernés.

La base de temps principale 40 comporte encore une entrée à laquelle est appliqué un signal Sw* émis par le magnétoscope MG à la lecture du bit Sw sur la piste "control-track". Le signal Sw* permet, en mode lecture, d'initialiser, dans la base de temps 40, le processus de traitement dans les deux canaux A et B, l'instant, "zéro" correspondant au début de la ligne "1", sur le canal A, après un gap et une ligne "625".

En pratique, les entrées d'horloge des convertisseurs 8a et 8b sont reliées aux sorties de commutateurs Xa et Xb, qui reçoivent les horloges d'échantillonnage correspondantes. Les multiplicateurs de fréquences de la base de temps 40 sont, par exemple, des oscillateurs à boucle à verrouillage de phase bien connus. Le circuit logique 42 représenté symboliquement comprend notamment des compteurs capables, pour chaque canal A ou B, à partir de la détection de l'impulsion négative de synchronisation et des horloges synthétisées de former les signaux E37a, E37b qui commandent respectivement le fonctionnement simultané du commutateur Xa et du démultiplexeur 37a, ou le fonctionnement simultané du commutateur Xb et du démultiplexeur 37b.

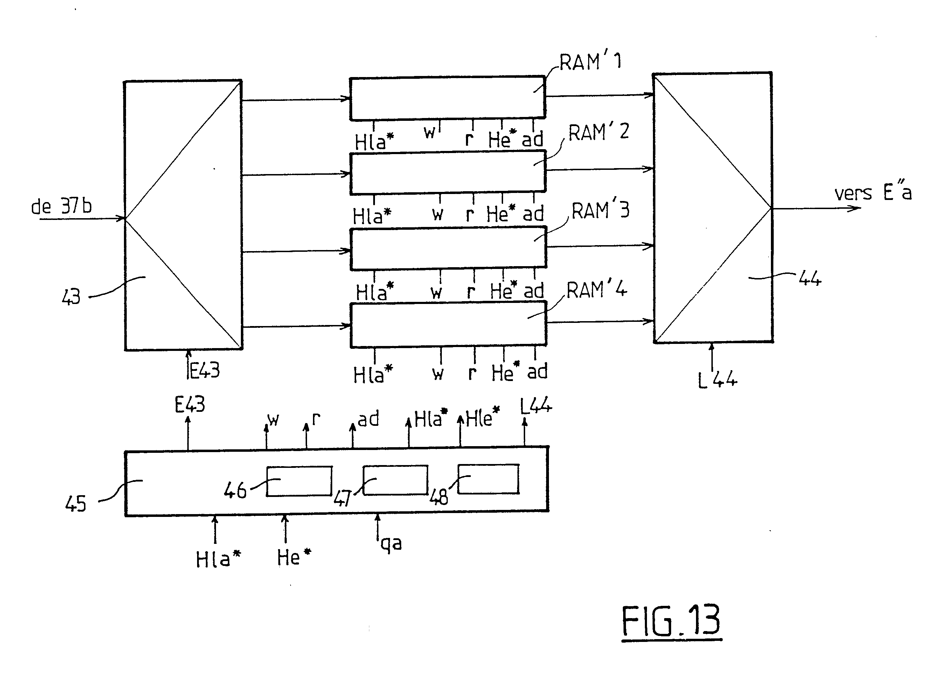

L'unité de compression 38a, Fig. 13, comprend un démultiplexeur 43 à quatre sorties dont l'entrée est reliée à la première sortie du démultiplexeur 37a et dont les sorties sont respectivement reliées aux entrées de quatre mémoires à accès aléatoire RAM'1 à RAM'4. Les sorties des mémoires RAM'1 à RAM'4 sont respectivement reliées aux quatre entrées d'un multiplexeur 44 dont la sortie est reliée à l'entrée E"a du multiplexeur 10, Fig. 12. L'unité 38a est complétée par une base de temps annexe 45. La structure de l'unité 38b est identique à celle de l'unité 38a.

La base de temps annexe 45 délivre les signaux de commande ou d'horloge suivants:
- le signal E43 servant à sélecter, dans le démultiplexeur 43, la sortie vers laquelle la partie CHR+LUM est à transmettre pour l'écriture dans une des mémoires RAM'1 à RAM'4,
- l'horloge d'écriture Hla* dans les mémoires RAM'1 à RAM'4, l'horloge Hla* étant reçue de la base de temps principale 40,
- le signal de commande d'écriture w servant à sélecter et commuter en mode écriture l'une des mémoires RAM'1 à RAM'4,
- le signal d'adressage ad dans les mémoires RAM'1 à RAM'4,
- le signal de commande de lecture r servant à sélecter et à commuter en mode de lecture l'une des mémoires RAm'1 à RAM'4,
- l'horloge de lecture He* des mémoires RAM'1 à RAM'4, l'horloge He* étant reçue de la base de temps principale 40, et
- le signal de commande L44 servant à sélecter, à chaque ligne reconstituée, l'entrée reliée à la mémoire RAM'1 à RAM'4 qui est à lire.

Par ailleurs, la base de temps annexe 45 reçoit de la base de temps principale 40 le signal qa qui est à "1" quand la partie CHR+LUM en cours d'écriture dans une des mémoires RAM'1 à RAM'4 est affectée d'un drop-out. En pratique, la base de temps 45 comprend, d'une part, un compteur 46 qui contient la position des échantillons dans chaque ligne et, d'autre part, un compteur de ligne 47. Elle est complétée par un circuit logique 48, lequel en fonction du compte dans 46 délivre le signal E43 et, en fonction du compte dans 47 et de l'information qa, délivre le signal L44.

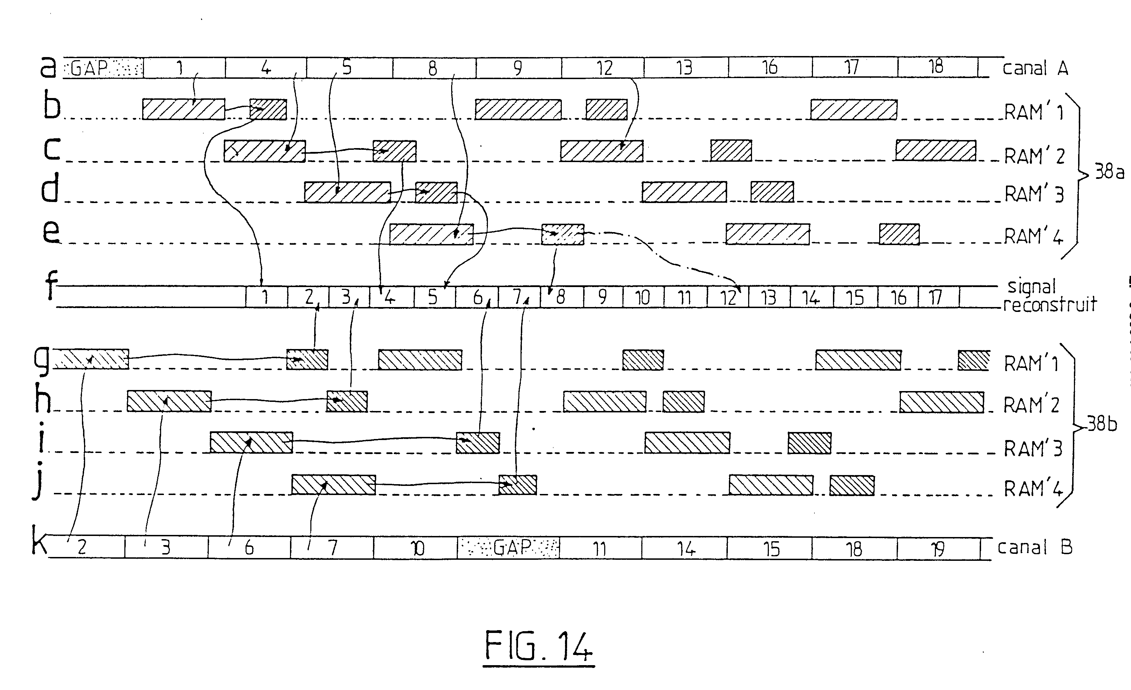

Le fonctionnement de l'unité de compression 38a sera mieux compris à l'aide des diagrammes temporels de la Fig. 14. Ces diagrammes font apparaître que les parties CHR+LUM des lignes étendues 1, 4, 5, 8, 9, etc, du canal A, diagramme a), sont séquentiellement écrites dans les mémoires RAM'1, RAM'2, RAM'3, RAM'4, comme le montrent les longs rectangles hachurées dans les diagrammes b), c), d) et e). Dans ces mêmes diagrammes, les petits rectangles hachurés représentent les mêmes informations compressées au moment où elles sont lues pour être multiplexées avec les informations provenant de l'unité 38b afin de reconstituer les zones analogiques du signal D2-MAC/PAQUET reconstruit, diagramme f). Dans le cas où, par exemple, le contenu de la ligne étendue 12 est affecté d'un drop-out, il est écrit dans la mémoire RAM'2, mais au moment de son instant de lecture le signal L44 orientera le multiplexeur 44 vers la mémoire RAM'4 si bien que l'ancienne ligne étendue 8 sera lue et prendra la place de la ligne étendue 12. C'est ce que montre la flèche en traits mixtes de la Fig. 14.

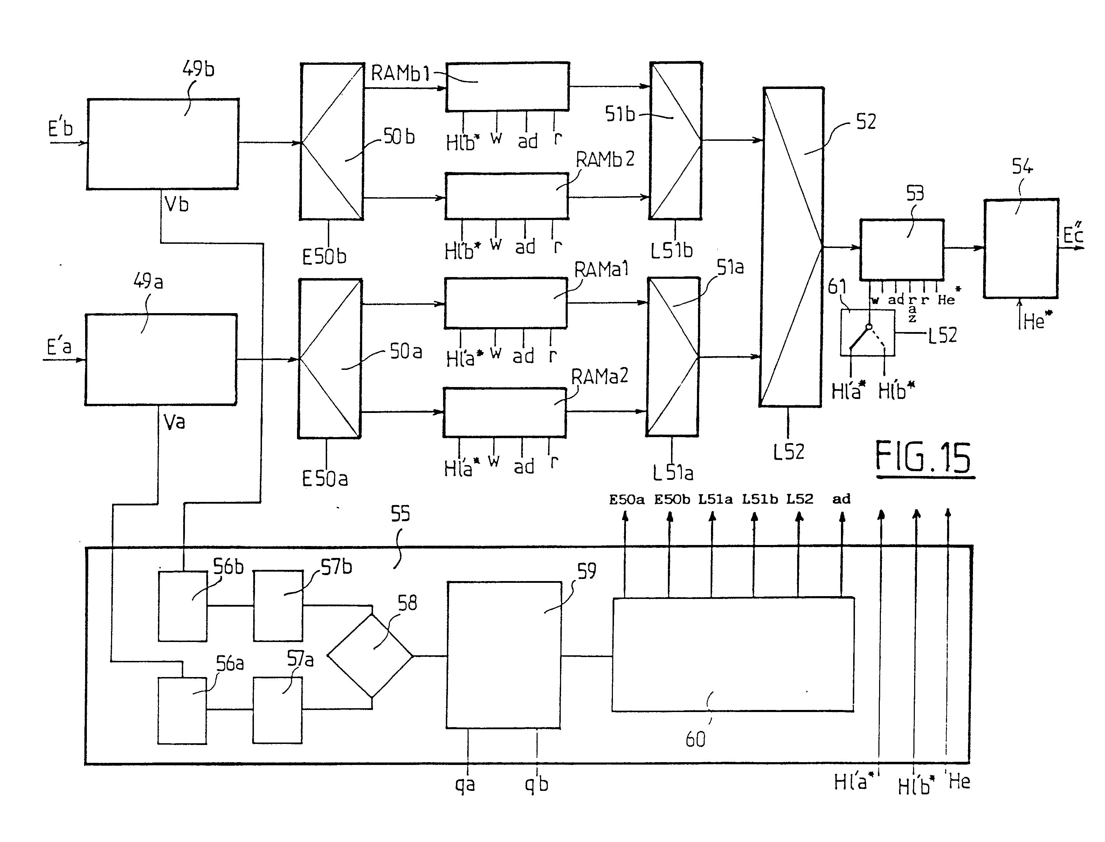

Le circuit de traitement des données numériques 39 de la Fig. 12, montré en détail à la Fig. 15, comprend deux décodeurs duobinaires de Viterbi 49a et 49b dont les entrées sont respectivement reliées aux entrées E'a et E'b et dont les sorties de signal sont respectivement reliées aux entrées de deux démultiplexeurs 50a et 50b. Chaque démultiplexeur 50a ou 50b a deux sorties qui sont respectivement reliées aux entrées de deux mémoires à accès aléatoires RAMa1 et RAMa2 ou RAMb1 et RAMb2. Chacune de ces mémoires a une capacité de 512 bits, c'est-à-dire capable de mémoriser une salve de données DON + DON, courbe b) et c), Fig. 2. Les sorties des mémoires RAMa1 et RAMa2 sont respectivement reliées aux entrées d'un multiplexeur 51a tandis que les sorties des mémoires RAMb1 et RAMb2 sont respectivement reliées aux entrées d'un multiplexeur 51b. Les sorties des multiplexeurs 51a et 51b sont respectivement reliées aux entrées d'un multiplexeur 52 dont la sortie est reliée à l'entrée d'une mémoire tampon 53, dont la capacité est également de 512 bits. La sortie de la mémoire tampon 53 est reliée à l'entrée d'un codeur duobinaire 54 dont la sortie E"c est reliée au multiplexeur 10, Fig. 12.

Chaque décodeur duobinaire de Viterbi 49a ou 49b comporte encore une sortie Va ou Vb, respectivement, qui délivre un bit "1" chaque fois qu'une configuration erronée a été rencontrée au cours du décodage. Les sorties va et vb sont respectivement reliées, à l'intérieur d'une base de temps annexe 55, aux entrées de deux compteurs 56a et 56b.

A chaque ligne étendue reçue, le compteur 56a compte le nombre de bit "1" délivré par la sortie Va et mémorise ce nombre dans une mémoire associée 57a dont la capacité est égale à deux mots. Le compteur 56b fonctionne de même en relation avec une mémoire 57b. Les sorties des mémoires 57a et 57b sont reliées aux deux entrées d'un comparateur 58 dont la sortie est reliée à une entrée d'un circuit de choix de mémoires 59. Le circuit de choix de mémoires 59 a encore deux entrées qui reçoivent les informations qa et qb du circuit logique 40, Fig. 12. La sortie du circuit de choix de mémoires 59 est reliée à un circuit logique 60 comprenant, entre autres, un compteur d'échantillons et un compteur de lignes, non montrés. Enfin, l'entrée d'horloge de la mémoire 53 est reliée à la sortie d'un commutateur 61 qui reçoit les deux horloges HI'a* et HI'b* et qui est commandé de la même façon que le multiplexeur 52.

En pratique, la base de temps 55 délivre les signaux de commande ou d'horloge suivants:
- les signaux E50a et E50b servant à sélecter, dans le démultiplexeurs 50a et 50b, les sorties respectives vers lesquelles les salves de données DON + DON sont à transmettre pour les enregistrer dans les mémoires RAMa1 ou RAMa2, pour celles qui proviennent du canal A, et RAMb1 ou RAMb2, pour celles qui proviennent du canal B.
- l'horloge d'écriture et de lecture HI'a* dans les mémoires RAMa1 et RAMa2,
- l'horloge d'écriture et de lecture HI'b* dans les mémoires RAMb1 et RAMb2,
- le signal de commande d'enregistrement w servant à sélecter et commuter en mode écriture l'une des mémoires RAMa1 à RAMb2 ou la mémoire 53,
- le signal d'adressage ad dans les mémoires RAMa1 à RAMb2 et la mémoire 53,
- le signal de commande de lecture r servant à sélecter et commuter en mode lecture l'une des mémoires RAMa1 à RAMb2 ou la mémoire 53,
- l'horloge de lecture He* de la mémoire 53,
- les signaux L51a, L51b et L52 servant à sélecter dans les démultiplexeurs 51a, 51b et 52, l'entrée concernée, le signal L52 servant également à commander le commutateur 61 afin de fournir à la mémoire 53 l'horloge d'écriture adéquate HI'a* ou HI'b*, et
- le signal RAZ servant à remettre à zéro la mémoire 53.

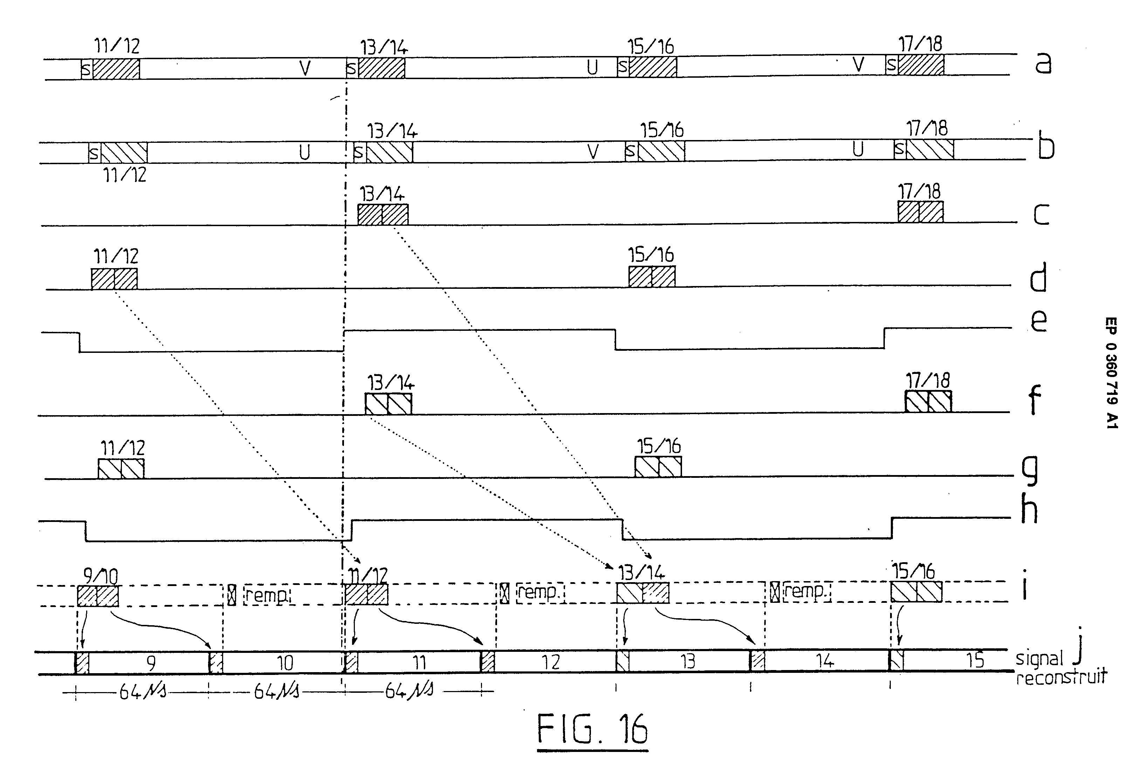

Le fonctionnement du circuit de traitement des données 39 sera mieux compris à l'aide des diagrammes temporels de la Fig. 16. Les diagrammes a) et b) font apparaître les salves respectivement lues dans les canaux A et B. Par exemple, la ligne étendue "12" du canal A porte les données des lignes incidentes "11" et "12" et la ligne étendue "11" du canal B porte les mêmes données. Les données de la ligne étendue "12" sont montrées aiguillées vers la mémoire RAMa2 par le multiplexeur 50a tandis que les données de la ligne étendue "11" sont aiguillées par le démutliplexeur 50b vers la mémoire RAMb2. Les deux salves de données ont été, par exemple, considérées comme sans erreur par les décodeurs de 49a et 49b. Si l'on suppose que, de plus, les lignes étendues "11" et "12" ne sont pas l'objet de signalisation de drop-out, au début de la ligne étendue suivante du canal A, soit "13", le contenu de la mémoire RAMa2 est lu et écrit dans la mémoire 53. La lecture de la mémoire 53 est ensuite déclenchée au rythme de l'horloge He*, plus rapide, pour transmettre les données de la ligne "11" au codeur duobinaire 54 afin de les retrouver au début de la ligne reconstruite "11", comme le montre le diagramme j) de la Fig. 16. La mémoire 53 est encore lue après 64 microsecondes pour transmettre les données appartenant à la ligne "12" et être placées en tête de la ligne reconstruite "12". Une fois, cette lecture faite, la mémoire 53 est remise à zéro par le signal RAZ, pour être prête à recevoir les données les lignes étendues "13" et "14".

Dans l'exemple décrit, on suppose que les données "13" portées par le canal A et reçues dans la mémoire RAMa1 ont comporté plus d'erreurs que celles qui étaient portées par le canal B et qui sont enregistrées dans la mémoire RAMb1. Dans ce cas, la première partie de la mémoire 53 sera remplie avec la première partie du contenu de la mémoire RAMb1. Par contre la seconde partie reçue dans la mémoire RAMa1 étant bonne, elle sert à remplir la seconde partie de la mémoire 53. La lecture de cette dernière se fait dans les mêmes conditions que précédemment.

Si un drop-out a affecté une ligne étendue, on sélecte pour remplir la mémoire 53, le contenu correspondant de la mémoire associée à l'autre canal.

En pratique, le comparateur 58 délivre l'information indiquant la ligne étendue dont les données comportent le moins d'erreurs, et le circuit logique 59, en fonction de cette information plus les informations de drop-out qa et qb, choisit, pour remplir la mémoire 53, les mémoires RAM à lire ainsi que dans ces mémoires quelle partie, première ou seconde, il faut lire.

De cette manière, il existe huit décisions possibles pour le choix des données à écrire dans la mémoire tampon 53.

En ce qui concerne la compression des parties CHR + LUM décrite en relation avec les Fig. 13 et 14, on a supposé jusqu'ici qu'elle était faite individuellement pour chaque canal, ce qui a conduit, dans le cas d'un drop-out, à remplacer une ligne de rang j par une ligne de range (j-4). Il est, en pratique, possible d'avoir moins d'écart entre la ligne affectée de drop-out et la ligne remplaçante, mais il faut alors combiner les compressions dans les deux canaux. On observera que c'est ce qui est fait, Figs. 15 et 16, en relation avec les données. L'homme de métier serait tout à fait capable de procéder aux modifications nécessaires.

Par ailleurs, on a dans la description qui précède montré des schémas de circuits comportant des organes séparés bien différenciés, tels que mémoires, démultiplexeurs, multiplexeurs, etc. Il est bien évident que l'on pourrait pour réaliser les mêmes fonctions utiliser un ou plusieurs microprocesseurs avec des mémoires associées.

## Revendications

1) Procédé d'enregistrement sur bande magnétique et de lecture de signaux D2-MAC/PAQUET, caractérisé en ce que, à l'enregistrement, dans chaque signal vidéo D2-MAC/PAQUET, d'une part, les composantes chrominance et luminance sont décompressées temporellement pour être enregistrées sur une bande magnétique par deux canaux (A, B), les deux canaux servant à respectivement enregistrer pratiquement simultanément les composantes décompressées d'une ligne impaire (2i + 1) et celles de la ligne paire (2(i + 1)) qui la suit, et, d'autre part, la salve de données à codage duobinaire est numérisée, convertie en un train numérique à codage NRZ, puis mémorisée, chaque train numérique relatif à un signal vidéo de ligne paire (2(i + 1)) étant ainsi mémorisé en série avec le train numérique relatif au signal vidéo de ligne impaire précédente (2i + 1) pour former un paquet qui est décompressé temporellement pour être enregistré, après recodage duobinaire, à la fois avec les composantes chrominance et luminance relatives à ladite ligne impaire (2i + 1) et celles relatives à ladite ligne paire (2(i + 1)), et, à la lecture, les composantes chrominance et luminance d'une couple de lignes impaire (2i + 1) et paire (2(i + 1)) étant décompressées temporellement, d'une part, et les paquets correspondant auxdites lignes étant décompressés, d'autre part, la sélection dans chacun desdits paquets du premier train à mettre en tête du signal vidéo D2-MAC/PAQUET de ladite ligne impaire (2i + 1) et celle du seconde train à mettre en tête du signal vidéo D2-MAC/PAQUET de ligne paire (2(i + 1)) étant faites en fonction d'informations d'erreurs.

2) Procédé d'enregistrement et de lecture de signaux D2-MAC/PAQUET caractérisé en ce que, en mode enregistrement, chaque signal vidéo D2-MAC/PAQUET incident est numérisé, puis le signal numérique obtenu est démultiplexé temporellement, les échantillons numériques correspondant aux composantes chrominance et luminance étant encore démultiplexés, à la fréquence ligne, sur deux voies, puis respectivement décompressés temporellement, puis convertis en composantes analogiques décompressées pour être sélectivement transmis par deux canaux (A, B), et les échantillons correspondant à la salve de données étant décodés, puis traités de manière que les données décodées portées par un signal incident de ligne paire (2(i + 1)) soient mises en série avec les données décodées portées par le signal incident de ligne impaire précédente (2i + 1) pour former un paquet de données qui, après conversion en signal analogique duobinaire, est multiplexé avec les échantillons des composantes chrominance et luminance des lignes paire (2(i + 1)) et impaire (2i + 1) portant lesdites données, composantes, les signaux transmis par les deux canaux (A, B) étant enregistrés simultanément sur deux pistes distinctes d'une bande magnétique, et, en mode lecture, les signaux lus simultanément sur les pistes de la bande magnétique étant respectivement traités, pour éventuellement détecter une situation de drop-out, puis numérisés et démultiplexés temporellement pour séparer les composantes chrominance et luminance, d'une part, et les paquets de données, d'autre part, les échantillons des composantes chrominance et luminance étant décompressés et, en fonction des cas de drop-out, multiplexés et convertis en signal analogique, les paquets de données étant décodés, puis décompressés et séparés en données de ligne impaire (2i + 1) et de ligne paire (2(i + 1)), qui sont, également en fonction des informations de drop-out, sélectivement multiplexées avec les échantillons des composantes chrominance et luminance des lignes correspondantes, puis convertis avec celles-ci.

3) Procédé suivant la revendication 1 ou 2, caractérisé en ce que, en mode lecture, le décodage des paquets de données codées en duobinaire, fournit des indications d'erreurs concernant séparément les données de lignes impaire (2i + 1) et paire (2(i + 1)) qui sont associées aux informations de drop-out pour sélectivement multiplexer les données avec les composantes chrominance et luminance.

4) Moyens de mise en oeuvre du procédé d'enregistrement suivant l'une des revendications 1 ou 2, caractérisés en ce qu'ils comprennent un convertisseur analogique/numérique (2) à l'entrée duquel est appliqué le signal D2-MAC/PAQUET incident et dont la sortie est reliée à l'entrée d'un multiplexeur (13) dont deux sorties sont respectivement reliées aux entrées d'unités (15a, 15b) de décompression temporelle de composantes chrominance et luminance, et une troisième sortie est reliée à l'entrée d'un circuit (16) de décompression temporelle de salve de données ayant deux sorties, les sorties des unités (15a, 15b) et du circuit (16) de décompression temporelle étant respectivement reliées aux entrées de deux multiplexeurs (19a, 19b) dont les sorties sont reliées par deux canaux (A, B) aux ensembles de têtes (Ka1, Ka2; Kb1, Kb2) d'enregistrement du magnétoscope (MG), le circuit (16) de décompression temporelle des salves de données comprenant un décodeur de Viterbi (26) dont la sortie est reliée à une mémoire d'assemblage (27) capable de mémo riser deux salves successives de données portées par un ligne impaire (2i + 1) et la ligne paire (2(i + 1)) qui la suit immédiatement, la sortie de la mémoire d'assemblage (27) étant reliée à l'entrée d'un démultiplexeur (28) à deux paires de sorties (S″a1, S″b1, S″a2, S″b2), les premières sorties (S″a1, S″a2) des paires étant reliées à des premières mémoires de décompression temporelle (29a, 30a) et les secondes sorties (S″b1, S″b2) des paires étant reliées à des secondes mémoires de décompression (29b, 30b), les sorties d'une paire (29a, 30a) de mémoires de décompression temporelle étant reliées aux entrées d'un multiplexeur (31a) dont la sortie est reliée à l'entrée d'un codeur duobinaire (32a) et les sorties de l'autre paire (29b, 30b) de mémoires de décompression temporelle étant reliées aux entrées d'un autre multiplexeur (31b) dont la sortie est reliée à l'entrée d'un autre codeur duobinaire (32b), les sorties des codeurs duobinaires (32a, 32b) étant reliées, par des convertisseurs numérique/analogique (18a, 18b), aux premières entrées de multiplexeurs (19a, 19b) à deux entrées dont les secondes entrées sont respectivement reliées, par des convertisseurs numérique/analogique (17a, 17b) aux sorties des unités (15a, 15b) de décompression de composantes chrominance et luminance et dont les sorties sont reliées aux deux canaux (A, B).

5) Moyens de mise en oeuvre du procédé de lecture suivant l'une des revendications 1 ou 2, caractérisés en ce qu'ils comprennent deux convertisseurs analogique/numérique (8a, 8b) aux entrées desquelles sont appliqués les signaux décompressés lus par deux ensembles de têtes (Ka1, Ka2; Kb1, Kb2) de lecture d'un magnétoscope (MG), les sorties des convertisseurs analogique/numérique (8a, 8b) étant respectivement reliées aux entrées de deux démultiplexeurs (37a, 37b), dont les premières sorties sont reliées aux entrées de deux unités (38a, 38b) de compression temporelle des composantes chrominance et luminance, et dont les deux secondes sorties sont respectivement reliées aux deux entrées d'un circuit (39) de compression temporelle des données, lequel comprend deux décodeurs de Viterbi (49a, 49b) respectivement reliées auxdites entrées et dont les sorties sont respectivement reliées aux entrées de deux démultiplexeurs (50a, 50b) dont les sorties sont reliées à des mémoires tampons (RAMa1, RAMa2; RAMb1, RAMb2) dont les sorties sont reliées aux entrées d'un multiplexeur de sélection (51a, 51b, 52) à autant d'entrées que de mémoires tampons, dont l'entrée de commande est reliée à la sortie d'un circuit logique de commande (55), et dont la sortie est reliée à une mémoire de compression temporelle (53) dont la sortie est reliée, par un codeur duobinaire (52), à une entrée d'un multiplexeur (10) à trois entrées dont les autres entrées sont respectivement reliées aux sorties des unités (38a, 38b) de compression temporelle des composantes chrominance et luminance, et dont la sortie est reliée à un convertisseur numérique/analogique (11) qui délivre le signal D2-MAC/PAQUET reconstruit.

6) Moyens suivant la revendication 5, caractérisés en ce que chaque unité (38a ou 38b) de compression temporelle des composantes chrominance et luminance comprend un démultiplexeur (43) dont les sorties sont reliées à des mémoires tampons (RAM'1 à RAM'4) dont les sorties sont reliées aux entrée d'un multiplexeur (44) dont la sortie constitue la sortie de ladite unité, les entrées de commande du démultiplexeur (43) et du multiplexeur (44) étant reliées aux sorties correspondantes d'un circuit logique de commande (45).

7) Moyens suivant la revendication 5, caractérisés en ce que les deux convertisseurs analogique/numérique (8a, 8b) sont précédés de décodeurs de drop-out (7a, 7b) dont les sorties sont reliées au circuit logique de commande (55).

8) Moyens suivant l'une des revendications 5 ou 6, caractérisés en ce que les décodeurs de Viterbi comportent respectivement des sorties d'information d'erreur qui sont reliées au circuit logique de commande (55).

9) Moyens suivant la revendication 4, caractérisés en ce que les unités (15a, 15b) de décompression temporelle des composantes chorminance et luminance comporte chacune un démultiplexeur (22) dont les sorties sont reliées à des entrées de mémoires de décompression temporelle (RAM1 à RAM4) dont les sorties sont reliées à autant d'entrées d'un multiplexeur 23 qui comporte une entrée supplémentaire reliée à la sortie d'une mémoire morte (24) dans laquelle est enregistré un top de synchronisation suivi d'une salve de référence de fréquence, les unités (15a et 15b) étant complétée par une base de temps auxiliaire (25).

10) Moyens suivant les revendications 5 et 6, caractérisés en ce que les horloges d'échantillonnage des convertisseurs analogique/numérique (8a, 8b) et d'écriture dans les mémoires (RAM'1 à RAM'4 et RAMa1, RAMa2, RAMb1, RAMb2 et 53) sont, selon que ces circuits sont associés au canal A ou au canal B, synthétisées en utilisant la salve de référence correspondante.

11) Procédé suivant l'une des revendications 1 à 3, caractérisé en ce que le taux de décompression temporelle des composantes de chrominance et de luminance est différent de celui des données.

a)

Ligne (2i + 1)    Ligne 2(i + 1)

U    V

DON        CHR         LUM         DON        CHR         LUM
(2i + i)   (2i + 1)    (2i + 1)    2(i + 1)   2(i + 1)    2(i + 1)

b)

U

SYNC   DON        DON        CHR              LUM
       (2i + 1)   2(i + 1)   (2i + 1)         (2i + 1)

c)

V

SYNC   DON        DON        CHR              LUM
       (2i + 1)   2(i + 1)   2(i + 1)         2(i + 1)

EP 0 360 719 A1

FIG.1

FIG.2

FIG. 3

T

Ka1

Ka1

5,66°

Ka2

Kb2

FIG. 4

POSITION DE LA COMMUTATION DES TETES

179 $\mu\lambda$

140 $\mu\lambda$

157 LIGNES

44 $\mu\lambda$

177 $\mu\lambda$

177 $\mu\lambda$

76 $\mu\lambda$

GAP

156 LIGNES

156 LIGNES

108 $\mu\lambda$

177 $\mu\lambda$ 5 LIGNES DE 127 $\mu\lambda$

177 $\mu\lambda$

GAP

177 $\mu\lambda$

GAP

GAP

½ TOUR DE TETE | ½ TOUR DE TETE | ½ TOUR DE TETE | ½ TOUR DE TETE | ½ TOUR DE TETE

| Ka1 | Ka2 | Ka1 | Ka2 | Ka1 |

a)

1 IMAGE                    1 IMAGE                    1 IMAGE

b)

156 LIG.+1/4 | 156 LIG. + 1/4 | 156 LIG.+1/4 | 156 LIG.+1/4 | 156 LIG.+1/4 | 156 LIG.+ 1/4

c)

| 156 LIGNES | 157 LIGNES | 156 LIGNES | 156 LIGNES | 156 LIGNES | 157 LIGNES |

d)

GAP     GAP     GAP     GAP     GAP     GAP

177 N/s    179 N/s    177 N/s    177 N/s    177 N/s    179 N/s

FIG. 5

EP 0 360 719 A1

FIG.6

EP 0 360 719 A1

FIG.7

FIG.8

FIG.9

EP 0 360 719 A1

FIG.10

EP 0 360 719 A1

ligne 12 ligne 13 ligne 16 ligne 17

DON. +
SYNC DON

CHR + LUM

C A N A L   A

ligne 11 ligne 14 ligne 15 ligne 18

C A N A L   B

## FIG. 11

FIG.12

FIG.13

de 37b

RAM'1

Hla*    w    r    He*   ad    RAM'2

Hla*    w    r    He*   ad    RAM'3

Hla*    w    r    He*   ad    RAM'4

Hla*    w    r    He*   ad

vers E″a

43

E43

44

L44

E43

w    r    ad    Hla*   Hle*   L44

45    46    47    48

Hla*    He*    qa

EP 0 360 719 A1

FIG. 14

EP 0 360 719 A1

FIG.15

EP 0 360 719 A1

FIG. 16

EP 0 360 719 A1

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| A,D | EP-A-0 243 739  (GRUNDIG E.M.V.)<br>* En entier *<br>--- | 1,2,4,5 | H 04 N    9/79 |
| A | EP-A-0 190 919  (SONY CORP.)<br>--- | | |
| A | EP-A-0 260 045  (MATSUSHITA ELECTRIC INDUSTRIAL CO., LTD.)<br>----- | | |

|  |  |  | DOMAINES TECHNIQUES RECHERCHES (Int. Cl.5) |
|---|---|---|---|
|  |  |  | H 04 N |

Le présent rapport a été établi pour toutes les revendications

| Lieu de la recherche | Date d'achèvement de la recherche | Examinateur |
|---|---|---|
| LA HAYE | 27-11-1989 | VERSCHELDEN J. |